(19) Europäisches Patentamt
European Patent Office
Office européen des brevets

(11) **EP 3 516 084 B1**

(12) **EUROPÄISCHE PATENTSCHRIFT**

(45) Veröffentlichungstag und Bekanntmachung des Hinweises auf die Patenterteilung:
**08.06.2022 Patentblatt 2022/23**

(21) Anmeldenummer: **17777796.8**

(22) Anmeldetag: **13.09.2017**

(51) Internationale Patentklassifikation (IPC):
*C22C 18/04* (2006.01)     *B32B 15/01* (2006.01)
*C21D 8/02* (2006.01)     *C23C 2/02* (2006.01)
*C23C 2/06* (2006.01)     *C23C 2/40* (2006.01)
*C21D 1/26* (2006.01)     *C22C 38/00* (2006.01)
*C22C 38/02* (2006.01)     *C22C 38/04* (2006.01)
*C22C 38/06* (2006.01)     *C22C 38/12* (2006.01)
*C22C 38/14* (2006.01)

(52) Gemeinsame Patentklassifikation (CPC):
**B32B 15/013; C21D 1/26; C21D 8/0226;
C21D 8/0236; C21D 8/0273; C22C 18/04;
C22C 38/001; C22C 38/004; C22C 38/02;
C22C 38/04; C22C 38/06; C22C 38/12;
C22C 38/14; C23C 2/02; C23C 2/06;** (Forts.)

(86) Internationale Anmeldenummer:
**PCT/EP2017/073027**

(87) Internationale Veröffentlichungsnummer:
**WO 2018/054742 (29.03.2018 Gazette 2018/13)**

(54) **VERFAHREN ZUM HERSTELLEN VON STAHLFLACHPRODUKTEN UND STAHLFLACHPRODUKT**

METHOD FOR PRODUCING FLAT STEEL PRODUCTS, AND A FLAT STEEL PRODUCT

PROCÉDÉ DE PRODUCTION DE PRODUITS PLATS EN ACIER ET PRODUIT PLAT EN ACIER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.09.2016 PCT/EP2016/072281**

(43) Veröffentlichungstag der Anmeldung:
**31.07.2019 Patentblatt 2019/31**

(73) Patentinhaber:
• **ThyssenKrupp Steel Europe AG**
**47166 Duisburg (DE)**
• **Thyssenkrupp AG**
**45143 Essen (DE)**

(72) Erfinder:
• **FRIEDEL, Frank**
**44143 Dortmund (DE)**
• **MACHEREY, Friedhelm**
**46519 Alpen (DE)**
• **SATTLER, Lena**
**D-47804 Krefeld (DE)**
• **YANIK, Robert**
**47506 Neukirchen-Vluyn (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
EP-A1- 1 411 140     EP-A1- 2 700 731
WO-A1-2016/055227    DE-A1- 19 701 443
DE-C1- 19 622 164    DE-T2- 69 909 305

(52) Gemeinsame Patentklassifikation (CPC): (Forts.)
     **C23C 2/40;** C21D 2211/005

**Beschreibung**

Die Erfindung betrifft ein Verfahren zur Herstellung eines Stahlflachprodukts und ein entsprechendes Stahlflachprodukt.

Wenn nachfolgend von einem Stahlflachprodukt die Rede ist, so sind damit Walzprodukte, wie Stahlbänder oder -bleche, gemeint, aus denen für die Herstellung von beispielsweise Karosseriebauteilen Zuschnitte oder Platinen abgeteilt werden.

Werden nachfolgend Zusammensetzungen von Werkstoffen angegeben, so beziehen sich die einzelnen Gehaltsangaben jeweils auf das Gewicht, soweit nichts anderes ausdrücklich angegeben ist. Angaben zu Zusammensetzungen von Atmosphären beziehen sich dagegen auf das Volumen.

Durch die Umstellung auf eine füllerlose Lackierung von Bauteilen für beispielsweise den Automobilkarosseriebau gerät das Thema "Langwelligkeit" bei Karosserieaußenhautteilen immer stärker in den Fokus.

Die Langwelligkeit an nicht lackierten Bauteilen oder Blechen lässt sich durch den Wsa-Wert "Wsa(1-5)" charakterisieren, der für das Auge sichtbare Höhenunterschiede bei Wellen zwischen 1 bis 5 mm Wellenlänge erfasst.

Für die Karosserieaußenhaut sollen Spitzenzahlen von mindestens 75/cm sowie ein Wsa-Wert von max. 0,35 $\mu$m am 5 %-verformten Marciniaknapf eingehalten werden. Das für die Verformung von Blechproben zu einem "Marciniaknapf' erforderliche Werkzeug und die zur Erzeugung solcher Proben anzuwendende Vorgehensweise sind in der ISO 12004-2:2008 beschrieben (siehe: 4.3.4; Grenzformänderungskurve, FLC), wobei die Messung am 5 % biaxial verformten Blech erfolgt.

Bisherige Maßnahmen zur Erzeugung von Feinblechen mit optimierten Oberflächenbeschaffenheiten konzentrierten sich zu Beginn nur auf die beim den Herstellungsprozess abschließenden Dressierwalzen zu erzielenden Verbesserungen. Es zeigte sich jedoch, dass die sichere Einhaltung eines Wsa-Wertes von max. 0,35 $\mu$m am 5 %-verformten Marciniak-Napf speziell bei weicheren IF-Stählen oder Stählen mit Bake-Hardening-Eigenschaften schwerfällt. Höherfeste Stähle haben sich dagegen als weniger problematisch herausgestellt.

Ein Beispiel für einen solchen Stand der Technik ist in der WO 2016/055227A1 beschrieben. Das dort beschriebene Verfahren führt zu einem kaltgewalzten und rekristallisierend geglühten Stahlflachprodukt mit ferritischer Gefügestruktur, das eine optimierte Umformbarkeit und Lackiereignung besitzt. Hierzu besteht es aus einem Stahl mit (in Gew.-%) C: 0,0001 - 0,003 %, Si: 0,001 - 0,025 %, Mn: 0,05 - 0,20 %, P: 0,001 - 0,015 %, Al: 0,02 - 0,055 %, Ti: 0,01 - 0,1 %, sowie jeweils optional Cr: 0,001 - 0,05 %, V: bis zu 0,005 %, Mo: bis zu 0,015 %, N: 0,001 - 0,004 %. Dabei hat das Stahlflachprodukt folgende mechanische Eigenschaften: Rp0,2 ≤ 180 MPa, Rm ≤ 340 MPa, A80 ≤ 40 %, n-Wert ≤ 0,23. An mindestens einer seiner Oberflächen hat es zudem eine arithmetische Mittenrauheit Ra von 0,8 - 1,6 $\mu$m und eine Spitzenzahl RPc von 75/cm. Zur Herstellung wird das Stahlflachprodukt im kontinuierlichen Durchlauf unter einer $N_2$-$H_2$-Glühatmosphäre rekristallisierend geglüht und einer Überalterung unterzogen. Anschließend wird das Stahlflachprodukt mit einem Dressiergrad von 0,4 - 0,7 % mit einer Arbeitswalze dressiergewalzt, deren Umfangsfläche eine Mittenrauheit Ra von 1,0 - 2,5 $\mu$m und eine Spitzenanzahl ≥ 100/cm besitzt, wobei die in die Oberfläche der Dressier-Arbeitswalze eingeformten Vertiefungen und Spitzen stochastisch verteilt vorliegen. Das Ziel dieser Vorgehensweise besteht darin, den vVsa1-5-0%-Wert bereits im unverformten Zustand möglichst niedrig zu halten, damit er sich beim späteren Umformen im Zuge der dabei auftretenden Beanspruchung nicht bis zu unzulässigen Werten verschlechtert. Dabei soll durch die Verwendung von glatten Dressierwalzen weniger Welligkeit auf das Metallband übertragen werden. Allerdings sind diesem Ansatz Grenzen gesetzt, weil sehr glatte Dressierwalzen dazu neigen, auf dem Stahlflachprodukt Abdrücke zu hinterlassen, und weil in der Regel oder aus anderen technischen Gründen bestimmte Mindestanforderungen an die Oberflächentextur der Dressierwalzen gestellt werden.

Neben diesem Stand der Technik ist aus der EP 2 700 731 A1 ein Verfahren zur Herstellung eines kaltgewalzten Stahlflachprodukts aus einem Stahl bekannt, der (in Gew.-%) 0,0005 - 0,0035 % C, max. 0,05 % Si, 0,1 - 0,6 % Mn, max. 0,02 % P, weniger als 0,02 % S, 0,01 % - 0,10 % Al, max. 0,0030 % N und mindestens 0,0010 % B enthält, wobei der B- und der N-Gehalt die Bedingung B/N ≤ 3,0 mit B/N = (B(mass %))/10.81)/(N(mass %)/14.01) erfüllen und wobei der Rest der Stahllegierung durch Fe und unvermeidbare Verunreinigungen eingenommen wird. Das Gefüge des kaltgewalzten Stahlflachprodukts zeichnet sich durch eine mittlere integrierte Intensität f in den (111)[1-10] to (111)[-1-12] Orientierungen in einer Ebene parallel zur Oberfläche des Stahlflachprodukts in einem Abstand zur Oberfläche des Stahlflachprodukts, der einem Viertel der Dicke des Stahlflachprodukts entspricht, von mindestens 7,0 aus. Gleichzeitig beträgt der mittlere Durchmesser der Ferritkörner in einem Querschnitt in Walzrichtung mindestens 6,0 - 10,0 $\mu$m. Darüber hinaus sind für den Young's Modulus "E" die Bedingungen $E_{AVE}$ ≥ 215 GPa, $E_0$ ≥ 210 GPa, $E_{45}$ ≥ 210 GPa, $E_{90}$ ≥ 210 GPa, und -0,4 ≤ Ar ≤ 0,4 erfüllt. Bei einem Ausführungsbeispiel wird ein derartiges Blech dadurch erzeugt, dass eine Bramme auf 1200 °C erwärmt und anschließend bei einer Warmwalzendtemperatur von 880 - 890 °C warmgewalzt wird. Das erhaltene Warmband wird bei 560 - 650 °C gehaspelt und anschließend, nach einer Beizbehandlung, kaltgewalzt. Der über das Kaltwalzen erzielte Umformgrad beträgt dabei 86 - 93,5 %, so dass das erhaltene Kaltband eine Dicke von 0,225 - 0,26 mm aufweist. Anschließend wird das Kaltband bei 660 - 730 °C im Durchlauf über eine Dauer von 30 s geglüht. Schließlich wird das geglühte Kaltband einem Dressierwalzen mit einem Umformgrad von 2,0 % unterzogen. Ziel dieser Vorgehensweise ist die Erzeugung von Stahlflachprodukten mit hohen Werten für den Young's-Modulus, welche eine hohe Steifigkeit der aus diesem Blech geformten Bauteile gewährleisten sollen. Das Problem der bei derart erzeugten kaltgewalzten Stahlflachprodukten auftretenden Oberflächenwelligkeit oder anderen Aspekten der Oberflächenbeschaffenheit wird dabei allerdings nicht betrachtet.

Schließlich ist aus der DE 196 22 164 C1 ein Verfahren zur Erzeugung eines kaltgewalzten Stahlbleches oder -bandes mit guter Umformbarkeit, insbesondere Streckziehbarkeit zur Herstellung von Preßteilen mit hoher Beulsteifigkeit aus einem Stahl folgender Zusammensetzung (in Masse-%): 0,01 - 0,08 % C, 0,10 - 0,80 % Mn, max. 0,60 % Si, 0,015 - 0,08 % Al, max. 0,005 % N, 0,01 - 0,04 % jeweils Ti und/oder Nb, max. 0,15 % Cu und/oder V und/oder Ni, Rest Eisen, bekannt, bei dem eine gegossene Bramme auf eine Temperatur oberhalb von 1050 °C vorgewärmt und anschließend mit einer Endtemperatur warmgewalzt wird, die oberhalb der Ar3-Temperatur liegt und bis zu 950 °C betragen kann. Das erhaltene Warmband wird dann bei Temperaturen von 550 bis 750 °C gehaspelt und anschließend mit einem Gesamtverformungsgrad von 40 bis 85 % kaltgewalzt. Auf das Kaltwalzen folgt ein rekristallisierendes Glühen des Kaltbandes bei einer Temperatur von mind. 720 °C in einem Durchlaufofen. Nach einem mit 5 bis 70 K/s erfolgenden Abkühlen wird zum Abschluss das erhaltene Kaltband dressiergewalzt. Auch bei diesem Verfahren steht nicht die Optimierung der Oberflächenbeschaffenheit, sondern die Ausprägung bestimmter mechanischer Eigenschaften des herzustellenden Stahlflachprodukts im Mittelpunkt.

Vor dem Hintergrund des voranstehend erläuterten Standes der Technik lag der Erfindung die Aufgabe zu Grunde, Stahlflachprodukte mit einer für weiche IF-Stähle oder Bake-Hardening-Stähle typischen Zusammensetzung und optimierten Oberflächenbeschaffenheiten zur Verfügung zu stellen und einen Weg zu nennen, solche Stahlflachprodukte betriebssicher zu erzeugen.

Im Hinblick auf das Verfahren hat die Erfindung diese Aufgabe dadurch gelöst, dass bei der Herstellung eines Stahlflachprodukts die in Anspruch 1 angegebenen Arbeitsschritte durchlaufen werden.

Ein erfindungsgemäß erzeugtes und beschaffenes Stahlflachprodukt weist die in Anspruch 7 angegebenen Merkmale auf.

Vorteilhafte Ausgestaltungen der Erfindung sind in den abhängigen Ansprüchen angegeben und werden nachfolgend wie der allgemeine Erfindungsgedanke im Einzelnen erläutert.

Erfindungsgemäß umfasst das erfindungsgemäße Verfahren zum Herstellen von Stahlflachprodukten, die nach einer fünfprozentigen biaxialen Verformung an mindestens einer seiner Oberflächen einen Wsa(1-5)-Wert von weniger als 0,35 $\mu$m, eine planare Anisotropie $\Delta$r von -0,5 bis +0,5 und in einem Bereich, der von der Oberfläche des jeweiligen Stahlflachprodukts bis zu einer Tiefe von weniger als 200 $\mu$m reicht, eine Änderung $\Delta$H der Nanohärte H von mehr als 0,1 GPa und weniger als 3,0 GPa aufweist, folgende Arbeitsschritte:

a) Bereitstellen einer Bramme, die aus einem Stahl erzeugt ist, der aus (in Gew.-%)

| | |
|---|---|
| C: | 0,0003 - 0,050 % |
| Si: | 0,0001 - 0,20 % |
| Mn: | 0,01 - 1,5 % |
| P: | 0,001 - 0,10 % |
| S: | 0,0005 - 0,030 % |
| Al: | 0,001 - 0,12 % |
| N: | 0,0001 - 0,01 % |

sowie jeweils optional einem oder mehreren Elementen aus der Gruppe "Ti, Nb, B, Cu, Cr, Ni, Mo, Sn" mit der Maßgabe

| | |
|---|---|
| Ti: | 0,0001 - 0,15 % |
| Nb: | 0,0001 - 0,05 % |
| B: | ≤ 0,005 % |
| Cu: | ≤ 0,15 % |
| Cr: | ≤ 0,15 % |
| Ni: | ≤ 0,15 % |
| Mo: | ≤ 0,10 % |
| Sn: | ≤ 0,05 % |

Rest Fe und unvermeidbare Verunreinigungen, besteht;

b) Erwärmen der Bramme in einem Ofen auf eine 1200 - 1270 °C betragende Brammenziehtemperatur Bzt, mit der die Bramme aus dem Ofen gezogen wird;

c) Warmwalzen der Bramme zu einem 3 - 5 mm dicken warmgewalzten Stahlflachprodukt, wobei das Warmwalzen ein Vorwalzen mit einer Dickenreduktion von 80 - 90 % und ein Fertigwalzen mit einer Dickenreduktion von 85 - 95 % umfasst, wobei der über das Warmwalzen insgesamt erzielte Umformgrad 95 - 99,5 % beträgt, wobei im letzten Walzstich eine Dickenreduktion ΔdF von 1 - 25 % erzielt wird und wobei die Warmwalzendtemperatur 850 - 950 °C beträgt;

d) Abkühlen des erhaltenen warmgewalzten Stahlflachprodukts auf eine Haspeltemperatur von 620 - 780 °C, wobei die Abkühlgeschwindigkeit 4 - 30 K/s beträgt;

e) Haspeln des warmgewalzten Stahlflachprodukts zu einem Coil;

f) Beizen des Warmbands zum Entfernen des Zunders;

g) Kaltwalzen des warmgewalzten Stahlflachprodukts zu einem kaltgewalzten Stahlflachprodukt, wobei der über das Kaltwalzen erzielte Gesamtumformgrad 70 - 90 % beträgt;

h) rekristallisierendes Glühen des kaltgewalzten Stahlflachprodukts bei einer Glühtemperatur von 650 - 900 °C, wobei das Glühen optional unter einer entkohlenden Glühatmosphäre durchgeführt wird;

i) optionales Dressierwalzen des kaltgewalzten Stahlflachprodukts mit einem Dressiergrad von 0,3-2,0 %;

wobei die Brammenziehtemperatur Bzt, die Gesamtliegezeit GLZ, die die Bramme zwischen ihrem Einstoßen und Ausziehen im Glühofen verbringt, die Dickenreduktion im letzten Warmwalzstich ΔdF und die Haspeltemperatur HT folgender Bedingung genügen:

$$-0{,}529653 \cdot Q + 0{,}944372 \cdot HT\_t + 0{,}711559 \cdot \Delta dF\_t < -0{,}1889459$$

mit Q = ((Bzt/GLZ) - 5,55281 °C/min) / (1,777359 °C/min)
Bzt: Brammenziehtemperatur in °C
GLZ: Gesamtliegezeit in min
HT_t = (HT - 728,13030 °C) / 42,300114 °C
HT: Haspeltemperatur in °C
ΔdF_t = (ΔdF - 12,43384 %) / 2,306328 %
ΔdF: Dickenreduktion im letzten Warmwalzstich in %.

Beim erfindungsgemäßen Stahlflachprodukt handelt es sich dementsprechend um ein kaltgewalztes Stahlflachprodukt, das aus einem Stahl hergestellt ist, der aus (in Gew.-%)

C: 0,0003 - 0,050 %,

Si: 0,0001 - 0,20 %,
Mn: 0,01 - 1,5 %,
P: 0,001 - 0,10 %,
S: 0,0005 - 0,030 %,
Al: 0,001 - 0,12 %,
N: 0,0001 - 0,01 %,

sowie jeweils optional einem oder mehreren Elementen aus der Gruppe "Ti, Nb, B, Cu, Cr, Ni, Mo, Sn" mit der Maßgabe

Ti: 0,0001 - 0,15 %,
Nb: 0,0001 - 0,05 %,
B: ≤ 0,005 %,
Cu: ≤ 0,15 %,
Cr: ≤ 0,15 %,
Ni: ≤ 0,15 %,
Mo: ≤ 0,10 %,
Sn: ≤ 0,05 %,

Rest Fe und unvermeidbare Verunreinigungen besteht,

und

das an mindestens einer seiner Oberflächen bei einer fünfprozentigen biaxialen Verformung eine niedrige Welligkeit besitzt, die durch einen Wsa(1-5)-Wert von weniger als 0,35 µm gekennzeichnet ist, wobei das Stahlflachprodukt eine planare Anisotropie Δr von -0,5 bis +0,5 und in einem Bereich, der von der betreffenden Oberfläche des jeweiligen Stahlflachprodukts bis zu einer Tiefe von weniger als 200 µm reicht, eine Nanohärte H von mehr als 0,1 GPa und weniger als 3,0 GPa aufweist.

Anders als der eingangs gewürdigte, im Wesentlichen auf einen speziellen Glühprozess mit anschließendem ebenfalls besonders abgestimmtem Dressierwalzen sich stützende Stand der Technik geht die Erfindung von der Erkenntnis aus, dass grundsätzlich jeder Arbeitsschritt eines Herstellverfahrens den am fertig kaltgewalzten Stahlflachprodukt feststellbaren Wsa(1-5)-Wert beeinflusst. Durch eine ganzheitliche Betrachtung der im Substrat über den Gesamtprozess ablaufenden werkstoffkundlichen Vorgänge hat die Erfindung dabei Vorgaben für die einzelnen Arbeitsschritte des erfindungsgemäßen Verfahrens entwickelt, durch die negative Einflüsse des jeweiligen Arbeitsschrittes auf den Wsa(1-5)-Wert weitestgehend ausgeschlossen sind. Die gegenseitige Abhängigkeit der in den einzelnen Arbeitsschritten erfindungsgemäß einzuhaltenden Verfahrensparameter wird dabei durch die formelmäßige Bedingung

$$-0{,}529653 * Q + 0{,}944372 * HT\_t + 0{,}711559 * \Delta dF\_t < -0{,}1889459$$

zum Ausdruck gebracht. In diese Bedingung fließen über den Faktor $Q = ((Bzt/GLZ) - 5{,}55281\ °C/min) / (1{,}777359\ °C/min)$ mit der Brammenziehtemperatur Bzt und der Gesamtliegezeit GLZ die für die Brammenerwärmung maßgeblichen Parameter genauso ein, wie die für den nach der Brammenerwärmung durchlaufenen Warmwalzprozess in Bezug auf den Wsa(1-5) wesentlichen Einflussgrößen, nämlich die Haspeltemperatur HT_t und, über den Parameter $\Delta dF\_t = (\Delta dF - 12{,}43384\ \%) / 2{,}306328\ \%$, die im letzten Stich des Warmwalzens erzielte Dickenreduktion ΔdF.

Die Welligkeitskennwerte Wsa(1-5) eines erfindungsgemäß erzeugten und beschaffenen Stahlflachprodukts werden dabei, wie bereits oben im Zusammenhang mit dem eingangs erläuterten Stand der Technik erläutert, an einem 5 %-verformten Marciniak-Napf ermittelt. Die Messung des Welligkeitskennwertes Wsa(1-5) wird gemäß Stahl-Eisen-Prüfblatt SEP 1941 (1. Ausgabe, Mai 2012) durchgeführt. Dabei wird der Wsa(1-5)-Wert hier jedoch abweichend von den Vorgaben des SEP 1941 nicht quer, sondern längs zur Walzrichtung gemessen.

Als Zielgröße für die Erfindung wurde festgelegt, dass der Wsa(1-5)-Wert bei einer fünfprozentigen biaxialen Verformung nur um maximale 0,05 µm zunehmen darf, dass also die Differenz ΔWsa zwischen dem Wsa(1-5)-Wert vor und nach der 5 %-Verformung höchstens 0,05 µm betragen darf. Als die Änderung des Wsa(1-5)-Wertes über die Verformung entscheidend beeinflussende Stoffmerkmale wurden dabei die Warmbandkorngröße, der in einer Texturanalyse nach Wassermann, G. (1970), H.-J. Bunge, Mathematische Methoden der Texturanalyse Akademie-Verlag Berlin 1969, 330 Seiten Geb. M 68.-. Krist. Techn., 5: K23. doi:10.1002/crat.19700050319, in an sich bekannter Weise bestimmte Peak der Textur {111}<110>, die Ausscheidungsgröße, die planare Anisotropie Δr, die HTL-Entfestigung sowie der Härteverlauf aus der Nanoindentermessung bestimmt und für diese Kennwerte folgende Maßgaben festgelegt, bei deren Einhaltung jeweils erfindungsgemäße kaltgewalzte Stahlflachprodukte mit besonders optimierter Oberflächenwelligkeit erhalten werden:

-    Die nach DIN EN ISO 643 bestimmte mittlere Korngröße im Gefüge des beim erfindungsgemäßen Verfahren als Zwischenprodukt erhaltenen warmgewalzten Stahlflachprodukts sollte vorzugsweise 10 - 18 µm betragen. Je höher die Brammenziehtemperatur Bzt ist, desto höher ist die Wahrscheinlichkeit, dass das spätere Warmband eine gröbere Korngröße aufweist. Die Warmbandkorngröße ist somit ein Indiz für eine zu hohe Brammenziehtemperatur Bzt. Eine hohe Brammenziehtemperatur Bzt bewirkt, dass mehr von der Stahlerzeugung im Stahlwerk stammende Ausscheidungen aufgelöst werden, vorzugsweise Karbide, Karbonitride und Sulfide. Da diese aufgelöst werden, können sie nicht mehr als Wachstumshindernisse für die Körner des Brammen- und Warmbandgefüges fungieren. Die Körner können somit ungehindert wachsen. Gröbere Warmbandkörner sind rekristallisationsträger als kleinere Warmbandkörner und vererben diese Eigenschaft ins Kaltbandgefüge. Gröbere Warmbandkörner nehmen die im Kaltwalzprozess induzierte Energie, die für die anschließende Rekristallisationsglühung benötigt wird, deutlich schlechter auf als kleinere Warmbandkörner. Damit wird die Rekristallisation in der Glühung deutlich träger, was wiederum zu hohe Δr-Werte nach sich zieht. Die Korngröße sollte nicht kleiner als 10 µm sein, weil das Stahlflachprodukt mit abnehmender Korngröße höhere Festigkeiten aufweist, was die Umformbarkeit verschlechtert. Die Korngröße sollte nicht größer als 18 µm sein, weil bei größeren Körnern die Energieaufnahme durch den Kaltwalzprozess verschlechtert wird. Dies führt zu einer geringeren Triebkraft für die anschließende Rekristallisation, wodurch die Textur negativ beeinflusst und damit der Δr-Wert wiederum zu hoch würde.

- Der Peak der Textur des Kaltbands bei einer Orientierung der Gammafaser von {111}<110> sollte vorzugsweise bei 8,5 - 10,5 liegen. Bei Einhaltung dieses Bereichs werden minimierte Δr-Werte erzielt. Der die planare Anisotropie repräsentierende Δr-Wert wird wie folgt berechnet:

$$\Delta r = (r\_längs + r\_quer - 2*r\_diagonal)/2$$

Dabei ist r_längs der längs zur Walzrichtung bestimmte r-Wert, r_quer der quer zur Walzrichtung bestimmte r-Wert und r_diagonal ist der im 45°-Winkel zur Walzrichtung bestimmte r-Wert. Untersuchungen haben gezeigt, dass die Unterschiede der r-Werte r_längs, r_quer und r_diagonal zur Walzrichtung stark voneinander abweichen und der Δr-Wert nicht sicher zwischen -0,5 und +0,5 eingestellt werden kann, wenn der Textur-Peak kleiner 8,5 oder größer 10,5 ist.

Ein normiertes Messverfahren für die Bestimmung der Textur steht nicht zur Verfügung. Jedoch lässt sich die Textur durch Messung von Polfiguren mit einem Röntgendiffraktometer und anschließender mathematischer Berechnung mittels der Reihenentwicklungsmethode nach Bunge (H.-J. Bunge: "Mathematische Methoden der Texturanalyse", Akademie-Verlag Berlin, 1969 und H.-J. Bunge: "Texture Analysis in Material Science", Butterworth London, 1983) bestimmen.

- Die gemäß DIN EN ISO 10247 bestimmte mittlere Größe der Ausscheidungen im Kaltband sollte vorzugsweise 60 - 150 nm betragen. Je feinere Ausscheidungen vor der rekristallisierenden Glühung vorliegen, desto größer ist die Gefahr, dass durch sie die mit der Glühung angestrebte Rekristallisation behindert wird. Die Ausscheidungen sollten darum nicht kleiner als 60 nm sein. Ausscheidungen, die größer als 150 nm sind, beeinflussen allerdings das Oberflächenerscheinungsbild negativ. Um Wsa-Werte von maximal 0,35 μm zu erzielen, sollten die Ausscheidungen eine mittlere Größe von 150 nm nicht überschreiten.

- Die gemäß DIN EN ISO 6892-1:2009 bestimmte planare Anisotropie des Stahlflachprodukts sollte vorzugsweise -0,5 bis 0,5 betragen.

- Die Nanoindentation, d.h. die Differenz ΔH der Nanohärte eines ausgehend von der Oberfläche des Stahlflachprodukts bis zu einer Tiefe von 25 μm und der Nanohärte eines oberflächenfernen, mehr als 25 μm von der Oberfläche des Stahlflachprodukts entfernten Bereichs, sollte bei einem erfindungsgemäßen Stahlflachprodukt optimaler Weise -0,3 MPa bis 0,4 MPa betragen. Die normale Anisotropie ist die Anisotropie entlang bzw. in Richtung der Blechdicke.

Ein Maß für die normale Anisotropie sind lokale Unterschiede im über die Blechdicke ermittelten Härteverlauf. In der vorliegenden Anmeldung werden dabei zwei Bereiche unterschieden: 1) ein oberflächennaher Bereich, welcher an der Stahlsubstratoberfläche beginnt und sich von 0 bis 25 μm ab Oberfläche in die Blechdicke erstreckt; 2) ein oberflächenferner Bereich, welcher sich von größer 25 μm Abstand ab Oberfläche in die Blechdickenmitte erstreckt und den restlichen Blechdickenbereich umfasst. Dieser oberflächenferne Bereich wird auch als Bulk bezeichnet.

Unter "H" wird eine absolute Nanohärte verstanden, welche in GPa gemessen wird. Die Nanoindentierung wird dabei gemäß DIN EN ISO 14577-1/-2/-4 bestimmt. Innerhalb des oberflächennahen Bereichs wird mindestens ein Nanohärtewert H gemessen. Typischerweise werden jedoch in der Regel mindestens drei Nanohärtemesswerte in äquidistanten Abständen entlang der Blechdicke aufgenommen und arithmetisch gemittelt, wobei alle Messwerte intragranular aufgenommen werden. Innerhalb des oberflächenfernen Bereichs wird ebenfalls mindestens ein Nanohärtewert gemessen. Typischerweise werden auch hier mindestens fünf intragranulare Nanohärtemesswerte in äquidistanten Abständen entlang der Blechdicke aufgenommen und arithmetisch gemittelt. Wenn vorliegend allein von "Nanohärte" die Rede ist, so ist damit der mindestens eine Messwert, in der Regel aber der Mittelwert mehrerer Einzelmesswerte gemeint.

Die Nanohärte H sollte in einem Bereich, der von der Oberfläche des jeweiligen Stahlflachprodukts bis zu einer Tiefe von weniger als 200 μm reicht, mehr als 0,1 GPa und weniger als 3,0 GPa, bevorzugt 1,0 GPa bis 2,5 GPa aufweisen. Die Nanohärte sollte in diesem Bereich nicht größer als 3,0 GPa sein, um eine ausreichend gute Fließfähigkeit und Umformbarkeit sicherzustellen, um lokale Materialeinschnürungen zu vermeiden und um damit einhergehend die Oberflächenwelligkeiten zu reduzieren.

"ΔH" bezeichnet die Differenz, die aus der Nanohärte eines oberflächennahen Bereichs H_25 μm und der Nanohärte eines oberflächenfernen Bereichs H_Bulk, welche auch als Bulkhärte bezeichnet wird, berechnet wird. ΔH ist positiv, wenn die Oberflächenhärte größer als die Bulkhärte ist. ΔH ist negativ, wenn die Bulkhärte größer als die Oberflächenhärte ist. ΔH sollte nicht weniger als -0,3 MPa und nicht mehr als 0,4 MPa betragen, um ein unregelmäßiges Fließverhalten des Kaltbandes bei Verformung und daraus resultierende Welligkeiten zu vermeiden. Bei größeren Härteunterschieden kann es bei der Umformung zu einem unterschiedlichen Fließverhalten oberflächennaher (Tiefe: 0-25 μm) zu oberflächenferneren (Tiefe: >25 μm) Bereichen kommen. Die Bereiche geringerer Härte verformen sich stärker im Vergleich zu Bereichen höherer Härte, wodurch Unebenheiten in Form von Welligkeiten auf der Oberfläche ausgelöst werden können.

- Die bei 2000 s und 650 °C bestimmte HTL-Entfestigung sollte vorzugsweise 86 - 100 % betragen. Unter der "HTL-Entfestigung" versteht man die Entfestigung des Werkstoffs während des Rekristallisationsvorgangs. Die HTL-Entfestigung ist ein Maß für das Rekristallisationsverhalten des Stahls. Je schlechter oder langsamer eine Probe rekristallisiert, umso wahrscheinlicher ist es, dass das Material anisotrope Eigenschaften aufweist. Mit steigender Anisotropie steigt das Risiko einer ausgeprägten Welligkeit.

Die HTL-Entfestigung wird mittels einer Hochtemperaturleitfähigkeitsmessung (HTL-Messung) an walzhartem Kaltband bestimmt. Das Messverfahren unterliegt keiner Norm. Für die HTL-Messung wird eine U-förmige Probe mit einer Stegbreite von 1 mm mittels Drahterodierung aus einem Blech herausgetrennt. An beiden Enden der Probe wird je ein Draht mittels Punktschweißverfahrens angebracht. Während des Glühvorgangs bei definierter Temperatur und unter Argonschutzgasatmosphäre wird über diese Messdrähte die elektrische Spannung der Probe gemessen und daraus die elektrische Leitfähigkeit berechnet. Während der Rekristallisation nimmt die elektrische Leitfähigkeit zu, was ein Maß für die Entfestigung darstellt. Die so bei 2000 s und 650 °C bestimmte HTL-Entfestigung sollte mindestens 86 % betragen, um einen $\Delta$r-Wert zwischen -0,5 und +0,5 und damit eine geringe Welligkeit zu gewährleisten.

Das erfindungsgemäße Verfahren eignet sich insbesondere für die Erzeugung von mit einer insbesondere auf Zn basierenden Korrosionsschutzbeschichtung versehenen kaltgewalzten Stahlflachprodukten mit optimierter Welligkeit.

Die in der vorliegenden Beschreibung erläuterten Erkenntnisse und Maßgaben gelten, soweit nicht ausdrücklich etwas anderes angegeben ist, sowohl für unbeschichtete als auch für mit einer Zn-basierten Schutzbeschichtung versehene Stahlflachprodukte.

Die Zn-Beschichtung kann eine im Wesentlichen ausschließlich aus Zn bestehende, in konventioneller Weise aufgebrachte Beschichtung (Beschichtungstyp "Z") oder aus einer Zn-Legierung, wie insbesondere aus einer ZnMg-Legierung (Beschichtungstyp "ZM"), bestehen. Die Beschichtung kann mittels Schmelztauchbeschichtung oder elektrolytischer Beschichtung aufgetragen sein. Die Beschichtung kann bei entsprechender Zusammensetzung darüber hinaus einer Galvannealing-Behandlung unterzogen worden sein (Beschichtungstyp "ZF"). Beispiele für mögliche Zusammensetzungen von Schmelzenbädern, in denen erfindungsgemäß erzeugte Stahlflachprodukte durch Schmelztauchbeschichten mit einer Zn-Beschichtung der erfindungsgemäß vorgesehenen Art beschichtet werden können, sind (Angaben in Gew.-%, wobei für die hier genannten Gehalte jeweils Anhaltswerte aufgeführt worden sind, für die die in der Praxis typischen Toleranzen gelten):

a) 0,2 % Al, Spuren von Fe und Pb, Rest Zn und unvermeidbare Verunreinigungen (Beschichtungstyp "Z"),

b) 1 % Al, 1 % Mg, Spuren von Fe und Pb, Rest Zn und vermeidbare Verunreinigungen (Beschichtungstyp "ZM"),

c) 0,1 % Al, Spuren von Fe und Pb, Rest Zn und unvermeidbare Verunreinigungen für Galvannealed-Bleche (Beschichtungstyp "ZF").

Wenn in der vorliegenden Anmeldung von einem Wsa-Wert die Rede ist, so ist damit der gemessene Wsa(1-5)-Wert im 5 % biaxial verformten Zustand gemäß SEP 1941 eines unbeschichteten oder beschichteten Blechs gemeint. Soweit in den Ausführungsbeispielen der vorliegenden Anmeldung auch ein "Wsa 0 %" und ein "Wsa 5 %" angegeben sind, meint "Wsa 5 %" den Wsa(1-5)-Wert im 5 % biaxial verformten Zustand gemäß SEP 1941. Analog dazu handelt es sich bei "Wsa 0 %" um den Wsa(1-5)-Wert im 0 % biaxial verformten Zustand, d.h. im unverformten Zustand, gemäß SEP 1941.

Der Wsa1-5-Wert ist ein Welligkeitskennwert, der im Grunde dem arithmetischen Mittenrauwert analog ist (gleiche Berechnung), jedoch im Unterschied dazu keine sehr kurzen Wellenlängen von max. 0,8 mm betrachtet, sondern Wellenlängen von 1 bis 5 mm. Zur Ermittlung des Wsa1-5-Werts werden ähnlich wie beim Mittenrauwert ausgehend von einer Profilmittellinie die Wellenberge oberhalb der Profilmittellinie sowie Wellentäler unterhalb der Profilmittellinie durch eine Integration aufaddiert und die so ermittelte Gesamtfläche dann durch die Messlänge dividiert. Dadurch ergibt sich ein eindimensionaler Wert, angegeben in $\mu$m, der der durchschnittlichen Wellenhöhe im Wellenlängenbereich von 1 mm bis 5 mm entspricht. Der Wsa1-5-Wert kann sowohl an flachen, unverformten Blechen (Wsa1-5-0 %-Wert), als auch an 5 %-biaxial verformten Blechen gemessen werden (Wsa1-5-5 %-Wert).

Wenn in der vorliegenden Anmeldung von einem Wsa$_{mod}$-Wert die Rede ist, so ist damit alleine die Eigenwelligkeit der Korrosionsschutzschicht, d.h. der Beschichtung des beschichteten Blechs, bezeichnet. Im Unterschied zum Wsa(1-5)-Wert eines unbeschichteten oder eines beschichteten Blechs wird der Wsa$_{mod}$-Wert aus der Messung der Auflagenverteilung der Korrosionsschutzschicht mittels einer ortsaufgelösten, rasternden Röntgenfluoreszenzanalyse (Fischerscope X-Ray) nach DIN EN ISO 3497 an 20 x 20 mm großen Flächen abgeleitet. Der Wsa-mod-Wert verkörpert somit den Wsa1-5-Wert der reinen Beschichtung und nicht des gesamten mit der Beschichtung belegten Stahlflachprodukts. Durch die Ermittlung des Wsa-mod-Wertes kann somit der Einfluss der reinen Beschichtung, unbeeinflusst vom Stahlsubstrat, herausgearbeitet werden. Die durch die Röntgenfluoreszenzanalyse ermittelten Beschichtungsdicken je Raster über die gesamte Fläche können dann durch eine heute auf dem Markt verfügbare, bekannte Bildbearbeitungssoftware in einen Wsa1-5-Wert der Beschichtung umgerechnet werden.

Die Grenzwellenlängen zur Bestimmung des Wsa-Werts und des $Wsa_{mod}$-Werts sind λc = 1 mm und λf = 5 mm. Die Grenzwellenlänge ist diejenige Wellenlänge, bei welcher der Profilfilter die Amplitude einer Sinuswelle auf 50 % reduziert. Sie kann als Maß für die Grenze zwischen Rauheit und Welligkeit verstanden werden. Die Grenzwellenlänge λf grenzt die Welligkeit gegenüber längeren Wellenlängen ab.

Die Erfindung geht von der Erkenntnis aus, dass die im Zuge einer Umformung eintretende Verschlechterung des Wsa-Wertes von Stahlflachprodukten aus weichen IF-Stählen oder Bake-Hardening-Stählen auf inhomogene Werkstoffeigenschaften zurückzuführen ist. Um dem zu begegnen, hat die Erfindung Maßnahmen vorgeschlagen, um die Anisotropie und an der Oberfläche feststellbare Welligkeit solcher Stahlflachprodukte zu optimieren.

Die planare Anisotropie Δr ist an erster Stelle als Maß für das unterschiedliche plastische Fließverhalten des Werkstoffes in der Blechebene aus der Dicke heraus und in verschiedene Richtungen relativ zur Walzrichtung herangezogen worden. Die Ermittlung der planaren Anisotropie Δr richtet sich nach der DIN EN ISO 6892-1:2009. Dabei werden mechanische Zugprüfknochen in drei Richtungen "längs", "quer" und "diagonal" zur Walzrichtung geprüft und anschließend die planare Anisotropie nach der Formel Δr = (r0°+r90°-2xr45°)/2 ermittelt. Je näher dieser Wert an Null ist, desto isotroper ist das Werkstoffverhalten bei der Umformung. Es konnte dabei gezeigt werden, dass der so ermittelte Δr-Wert mit dem erfindungsgemäß zu beschränkenden ΔWsa-Wert korreliert.

Des Weiteren wird die "normale Anisotropie" betrachtet. Als Maß für diesen Kennwert kann der Nanohärteverlauf herangezogen werden. Hierzu ist es erforderlich, den Verlauf der mechanischen Eigenschaften des Werkstoffes entlang der Blechdicke zu kennen, da davon auszugehen ist, dass eine über die Umformung eintretende Verschlechterung des Wsa-Wertes (=ΔWsa) auf eine lokal begrenzt aufgehärtete bzw. einen im Vergleich zum Werkstoffinneren festeren oberflächennahen Bereich zurückzuführen ist. Dabei kann die oberflächennahe Schicht weicher sein als die oberflächenferne Schicht, wie z.B. im Falle entkohlter Oberflächenschichten. Sie kann aber auch eine höhere Härte als die oberflächenferne Schicht aufweisen, wie es zum Beispiel bei randschichtgehärteten Werkstoffen der Fall ist.

Je größer der Härteunterschied ΔH im oberflächennahen Bereich ist und je dünner der oberflächennahe Bereich ist, in dem ein Härtemaximum vorliegt (= steiles "Badewannenprofil des Härteverlaufs"), desto höher ist das Potenzial einer Verschlechterung des Wsa-Werts über die Umformung. Die Ursachen hierfür sind verschiedener Natur und zurückzuführen auf eine höhere Versetzungsdichte im oberflächennahen Bereich z.B. durch den Dressierprozess, eine unvollständig rekristallisierte erste Kornlage speziell bei weichen, Ti-stabilisierten IF-Stählen, Mischkristallverfestigung durch oxidische u. ä. Ausscheidungen an der Oberfläche sowie bei BH-Stählen die Kohlenstoffanreicherung an der Oberfläche.

Insbesondere im Fall, dass das erfindungsgemäße Stahlflachprodukt mit einer metallischen Korrosionsschutzbeschichtung, insbesondere einer Zn-Beschichtung, beschichtet ist, ist es zusätzlich zu den Substratbetrachtungen notwendig, den Beschichtungseinfluss auf die Langwelligkeit zu betrachten, um das gesamte System Substrat-Überzug beurteilen zu können. Ein geeignetes Verfahren hierfür ist die Röntgenfluoreszenz (Fischer-Scope X-Ray) nach DIN EN ISO 3497, bei der die Zinkschichtverteilung auf einem definierten Flächenbereich abgerastert wird und der Substrateinfluss durch geeignete Filter ausgeblendet wird. Auf diese Weise wird nur der Langwelligkeitsanteil der Beschichtung betrachtet, der direkt durch die Düsenparameter und den Dressierprozess beeinflusst wird. Durch einen speziellen mathematischen Algorithmus wird die für das Auge sichtbare Welligkeit zur Bewertung in einen objektiven Kennwert überführt (vergl. SEP 1941).

Die Brammenziehtemperatur Bzt beträgt höchstens 1270 °C und ist nach unten auf mindestens 1200 °C begrenzt. Bei derart auf den Bereich von 1200 - 1270 °C begrenzten Brammenziehtemperaturen Bzt werden die im Stahl der Bramme enthaltenen Mn-Sulfide nicht aufgelöst. Die Auflösung der MnS-Ausscheidungen lässt sich insbesondere dann verhindern, wenn die Brammenziehtemperatur Bzt weniger als 1250 °C beträgt. Nach unten ist die Brammenziehtemperatur auf 1200 °C limitiert, weil bei Unterschreiten dieser Temperatur aufgrund des dann fehlenden Temperaturpuffers eine ferritische Umwandlung bereits in der Fertigstaffel des Warmwalzens droht. Dies ist unerwünscht, weil damit negative Auswirkungen auf die mechanischen Eigenschaften einhergehen würden. Zudem könnte sich der Verschleiß auf den Lagerböcken im Ofen signifikant erhöhen. Die Gesamtliegezeit GLZ der Bramme im Ofen ist abhängig von dessen Länge. Bei einer Gesamtliegezeit von weniger als 180 Minuten würde keine ausreichende Durchwärmung erzielt, wodurch wiederum die Gefahr der ferritischen Umwandlung in der Fertigstaffel ausgelöst würde. Bei einer Gesamtliegezeit von mehr als 400 Minuten würden dagegen zu viele aus der Brammenerzeugung im Stahlwerk stammende Ausscheidungen in der Bramme aufgelöst.

Durch die Einstellung vergleichbar niedriger Brammenziehtemperaturen wird somit erreicht, dass die im Brammenofen nicht aufgelösten Ausscheidungen, insbesondere Mangan-Sulfide, Titankarbide, Titannitride, Titankarbonitride, Kupfersulfide und Mangansulfide und desgleichen, auch während des anschließenden Warmwalzprozesses nicht aufgelöst werden und anschließend feine Ausscheidungen im Warmband bilden. Die Entstehung derart feiner Ausscheidungen soll vermieden werden. Die Größe der Ausscheidungen sowie ihre Verteilung sind entscheidend für den Erfolg der Erfindung, da durch die Präsenz feiner Ausscheidungen der Rekristallisationsprozess beeinträchtigt werden kann. Je kleiner und je feiner verteilt die Ausscheidungen im Warmband vorliegen, desto stärker würde die Rekristallisation behindert und damit einhergehend der r-Wert, der $\Delta$r-Wert und letztlich auch der $\Delta$Wsa-Wert des Stahlflachprodukts verschlechtert, der direkt vom $\Delta$r-Wert abhängt.

Dabei berücksichtigt die Erfindung den Einfluss, den das komplexe Zusammenspiel zwischen der im erfindungsgemäß vorgeschriebenen Bereich eingestellten Brammenziehtemperatur Bzt und der Gesamtliegezeit GLZ, die die Bramme zwischen ihrem Einstoßen und Ausziehen im Glühofen verbringt, einerseits sowie der Dickenreduktion im letzten Warmwalzstich $\Delta$dF und der Haspeltemperatur HT andererseits auf die Qualität des erfindungsgemäß erhaltenen Endprodukts und insbesondere auf dessen Nanohärte (Bulk und Oberfläche) hat, durch die erfindungsgemäß einzuhaltende Bedingung:

$$-0{,}529653 * Q + 0{,}944372 * HT\_t + 0{,}711559 * \Delta dF\_t < -0{,}1889459$$

| | |
|---|---|
| mit Q = | ((Bzt/GLZ) - 5,55281 °C/min) / (1,777359 °C/min) |
| Bzt: | Brammenziehtemperatur in °C |
| GLZ: | Gesamtliegezeit in min |
| HT_t = | (HT - 728,13030 °C) / 42,300114 °C |
| HT: | Haspeltemperatur in °C |
| $\Delta$dF_t = | ($\Delta$dF - 12,43384 %) / 2,306328 % |
| $\Delta$dF: | Dickenreduktion im letzten Warmwalzstich in % |

Der Formulierung dieser Bedingung liegt die Erkenntnis zu Grunde, dass die für die Prozessierung der Brammen in der dem Warmwalzen vorgelagerten so genannten Vorstraße wesentlichen Einflussgrößen Brammenziehtemperatur Bzt und Gesamtliegezeit GLZ auf der einen Seite sowie den Warmwalz- und Kühlstreckenparametern auf der anderen Seite dafür verantwortlich sind, dass sich im fertig erhaltenen Stahlflachprodukt eine bestimmte Textur herausbildet, die dann in einem bestimmten $\Delta$r-Wert zum Ausdruck kommt.

Durch die Kombination aus Brammenziehtemperatur Bzt und Gesamtliegezeit GLZ wird die Auflösung und Bildung von Ausscheidungen in der Bramme beeinflusst, da dort sehr hohe Temperaturen und im Vergleich zum eigentlichen Warmwalzprozess auch sehr lange Prozesszeiten von mehreren Stunden vorherrschen. So werden zuvor während des Erstarrens der Schmelze zu der Bramme entstandene Ausscheidungen im Zuge der Brammenglühung aufgelöst, andere entstehen neu und wieder andere bleiben bestehen, werden also nicht aufgelöst. Diese Auflösung, Bildung und Nichtauflösung von Ausscheidungen interagiert unmittelbar mit den Parametern des Warmwalzens und den Kühlstreckenparametern und beeinflusst damit das Warmbandgefüge entscheidend.

Die erfindungsgemäß vorgegebene Bedingung für die Ofenliegezeit GLZ und die Brammenziehtemperatur Bzt sind so gewählt, dass grobe Ausscheidungen in der Bramme nicht aufgelöst werden. Bei zu hohen Brammenziehtemperaturen oder zu langen Glühzeiten würden dagegen aus dem Erstarrungsprozess stammende, relativ grobe Ausscheidungen in der Bramme aufgelöst. Dadurch könnte das Warmbandkorn während des Walzprozesses zunächst ungehindert wachsen. Nachdem die Bramme aus dem Ofen gezogen ist, fällt die Temperatur zunächst der Bramme und anschließend des aus ihr gewalzten Warmbands stetig ab. Dadurch nimmt der Druck zur Bildung von Ausscheidungen im verarbeiteten Stahlmaterial zu mit der Folge, dass die im Ofen in der Bramme zuvor aufgelösten Ausscheidungen sich neu bilden, nun jedoch nicht mehr grob, sondern in einer viel feineren Ausprägung als nach der Erstarrung der Stahlschmelze. Diese Verfeinerung rührt daher, dass bei Warmwalzprozessen die Temperaturen deutlich niedriger sind als beim Vergießen der Schmelze zu der Bramme.

Die erfindungsgemäße Brammenziehtemperatur Bzt und Gesamtliegezeit GLZ sind demgegenüber gezielt so gewählt, dass die Auflösung der groben Ausscheidungen und damit einhergehend die Bildung feiner Ausscheidungen verhindert wird, da feine Ausscheidungen, d.h. Ausscheidungen mit einer mittleren Größe von beispielsweise kleiner 60 nm, die Rekristallisation behindern würden.

Auch die Nanohärte (Bulk und Oberfläche) wird tendenziell durch die Vorstraßenparameter Brammenziehtemperatur Bzt und Gesamtliegezeit GLZ beeinflusst. Die Glühung der Brammen im Wiedererwärmungsofen passiert bei hohen Temperaturen unter einer typischerweise zu 65 - 75 Vol.-% aus Stickstoff bestehenden Atmosphäre. Unter Zugrundelegung eines Arrheniusansatzes kommt es unter diesen Bedingungen zur Diffusion von N in $\Gamma$-Fe und damit

zu einer Aufstickung, d.h. einer Stickstoffanreicherung, in der Brammenoberfläche. Der von der Aufstickung erfasste Dickenbereich erstreckt sich ausgehend von der freien Oberfläche der Bramme bis zu einer Tiefe von ca. 3 mm. Die in diesem Bereich stattfindende Stickstoffanreicherung geht mit einer Aufhärtung der Oberfläche einher. Ausgehend von einer typischen Brammendicke von 255 mm ergibt sich bei einer Dicke des aufgestickten Bereichs von 3 mm bei einem nach dem erfindungsgemäßen Verfahren erhaltenen 0,65 mm dicken Stahlflachprodukt eine an die Oberfläche des Stahlflachprodukts angrenzende aufgehärtete Schicht von etwa 8 μm.

Zudem wirkt sich die Einhaltung der erfindungsgemäßen Maßgaben während der Glühbehandlung positiv auf die Minimierung der Aufstickung der Brammenoberfläche durch eine stickstoffhaltige Ofenatmosphäre aus. Typische Ofenatmosphären weisen 65 - 75 Vol.-% Stickstoff, 5 - 15 Vol.-% $CO_2$, 15 - 25 Vol.-% $H_2O$ und 1 - 2 Vol.-% Sauerstoff auf. Eine mit Stickstoff zu stark angereicherte Brammenoberfläche würde im Kaltfeinblech zu einer oberflächennah aufgehärteten Schicht führen, wobei auch hier unter "oberflächennah" eine Schicht bezeichnet ist, die sich ausgehend von der freien Oberfläche typischerweise über eine Tiefe von 0 - 25 μm erstreckt. Durch die Maßgabe der Erfindung wird die unvermeidbar eintretende Aufstickung so begrenzt, dass schädliche Auswirkungen auf das fertige erfindungsgemäß erzeugte Produkt auf ein Minimum reduziert sind.

Das Warmwalzen kann erfindungsgemäß in konventioneller Weise in mehreren Warmwalzstufen durchgeführt werden. In der Praxis werden dazu beispielsweise Warmwalzanlagen eingesetzt, in denen das Warmband in fünf oder sieben Warmwalzstufen fertig warmgewalzt wird.

Abhängig von der jeweils zur Verfügung stehenden Warmwalztechnik kann das Warmwalzen in konventioneller Weise in ein Vorwalzen und in ein Fertigwarmwalzen unterteilt sein. Das dem Fertigwalzen vorgeschaltete Vorwalzen kann dabei in ebenfalls konventioneller Weise reversierend durchgeführt werden, um aus der Bramme ein Vorband mit für das Fertigwarmwalzen geeigneter Dicke zu erzeugen. Beim Vorwalzen sollte die Auslauftemperatur, mit der das vorgewalzte Band das Vorwalzen verlässt, nicht unterhalb von 1050 °C liegen, um eine vorzeitige ferritische Umwandlung zu vermeiden.

Die Legierung der erfindungsgemäß bereitgestellten Stahlbrammen umfasst sogenannte "weiche IF Stähle" sowie Stähle mit ultra-niedrigem C-Gehalt ("ULC-Stähle"), die Bake-Hardening-Eigenschaften besitzen.

In Tabelle 1 ist jeweils eine für einen weichen IF-Stahl "weicher IF", für einen ULC-Stahl "ULC-BH" ("ULC" = Ultra Low Carbon) mit Bake-Hardening-Eigenschaften und einen ELC-Stahl "ELC" ("ELC" = Extra Low Carbon) mit ausgeprägten Bake-Hardening-Eigenschaften typische Legierungsvorschrift angegeben, die von der von der Erfindung für die erfindungsgemäß prozessierte Bramme und das erfindungsgemäße beschaffene Stahlflachprodukt vorgegebenen Legierungsvorschrift umfasst sind.

Die erfindungsgemäß vorgesehenen Legierungsbestandteile wirken sich wie folgt aus:

Kohlenstoff (C):

Bei IF-Stählen der hier in Rede stehenden Art sind Kohlenstoff und Stickstoff komplett durch Mikrolegierungselemente wie Titan und/oder Niob abgebunden. So werden geringe Streckgrenzen erreicht und die Freiheit von Fließfiguren wird garantiert. Die C-Gehalte können in diesem Zusammenhang bis zu 0,05 Gew.-% betragen, wobei sich bei C-Gehalten von mindestens 0,0003 Gew.-% die in Bezug auf IF-Stähle günstigen Wirkungen der Anwesenheit von Kohlenstoff besonders sicher einstellen. Bevorzugt werden dabei C-Gehalte von mindestens 0,005 Gew.-% oder höchstens 0,045 Gew.-% eingestellt.

Bei ULC-Stählen mit Bake-Hardening-Eigenschaften ist neben der Steuerung der Umformeigenschaften die Steuerung des BH-Effektes durch den C-Gehalt (ggf. auch N-Gehalt) von großer Bedeutung. Der freie Kohlenstoff diffundiert nach Verformung während des KTL Prozesses an die durch Umformung erzeugten Versetzungen. Bei nachfolgenden Fließprozessen (Umformungen) behindert der Kohlenstoff die Versetzungsbewegung und die Streckgrenze wird erhöht. Somit werden gute Umformeigenschaften bei der Verarbeitung im Presswerk mit höheren Streckgrenzen am Bauteil nach einer Einbrennlackierung ("KTL") kombiniert. Der C-Gehalt von ULC-Stählen der erfindungsgemäß verarbeiteten Art liegt dabei optimalerweise im Bereich von 0,0025 Gew.-%, wobei sich Gehalte von mindestens 0,0015 Gew.-% oder höchstens 0,0035 Gew.-% als besonders praxisgerecht herausgestellt haben.

Stickstoff (N):
Um die voranstehend im Zusammenhang mit Kohlenstoff erläuterten Effekte zu unterstützen, kann Stickstoff in Gehalten von bis zu 0,01 Gew.-% im erfindungsgemäß jeweils verarbeiteten Stahl vorhanden sein. Diese Obergrenze sollte nicht überschritten werden, um gute Umformeigenschaften und ein gutes Alterungsverhalten des Stahls zu gewährleisten. Um die unterstützende Wirkung in der Praxis sicher erzielen zu können, können N-Gehalte von mindestens 0,0001 Gew.-% zweckmäßig sein. Besonders positiv wirkt sich die Anwesenheit von N im erfindungsgemäß verarbeiteten Stahl bei N-Gehalten von mindestens 0,0008 Gew.-% aus. Schädliche Einflüsse der Anwesenheit von N können dadurch besonders sicher vermieden werden, dass der N-Gehalt auf höchstens 0,008 Gew.-% beschränkt wird.

Silizium:

Silizium ist im Stahl der erfindungsgemäß bereitgestellten Bramme in Gehalten von bis zu 0,2 Gew.-% vorhanden. Si wirkt als Mischkristallhärter. Es erhöht die Streckgrenze und Zugfestigkeit des Stahls. Höhere Gehalte von Silizium verschlechtern jedoch das Umformverhalten. Die positiven Effekte von Si im erfindungsgemäß verarbeiteten Stahl können bei Gehalten von mindestens 0,0001 Gew.-% sicher genutzt werden. Besonders positiv wirkt sich die Anwesenheit von Si im erfindungsgemäß verarbeiteten Stahl bei Si-Gehalten von mindestens 0,0005 Gew.-% aus. Schädliche Einflüsse der Anwesenheit von Si können dadurch besonders sicher vermieden werden, dass der Si-Gehalt auf höchstens 0,15 Gew.-% beschränkt wird.

Mangan:

Mangan bildet mit Schwefel MnS und vermindert damit die negative Wirkung des gegebenenfalls anwesenden Schwefels. Gleichzeitig wirkt Mn auch als Mischkristallverfestiger und hat insoweit dieselbe Wirkung wie Si. Der positive Einfluss von Mn auf die Eigenschaften erfindungsgemäß verarbeiteten Stahls kann dadurch besonders sicher genutzt werden, dass der Mn-Gehalt mindestens 0,01 Gew.-%, insbesondere mindestens 0,03 Gew.-%, beträgt. Die positiven Einflüsse der Anwesenheit von Mn können bei Gehalten von bis zu 1,5 Gew.-%, insbesondere bis zu 0,8 Gew.-%, effektiv genutzt werden.

Phosphor:

Phosphor erhöht auch in Eisen-Legierungen der hier in Rede stehenden Art die Streckgrenze und Zugfestigkeit. Allerdings neigt Phosphor zu Primärseigerungen bei der Erstarrung der Schmelze und zu Sekundärseigerungen im festen Zustand durch die starke Abschnürung des Gamma-Gebietes. Infolge der verhältnismäßig geringen Diffusionsgeschwindigkeit sowohl im Alpha- als auch im Gamma-Mischkristall können gegebene Seigerungen nur schwierig wieder ausgeglichen werden, weshalb der P-Gehalt erfindungsgemäß verarbeiteter Stähle auf 0,1 Gew.-%, insbesondere maximal 0,08 Gew.-%, beschränkt ist. Der positive Einfluss von P auf die Eigenschaften erfindungsgemäß verarbeiteten Stahls kann dadurch besonders sicher genutzt werden, dass der P-Gehalt mindestens 0,001 Gew.-%, insbesondere mindestens 0,002 Gew.-%, beträgt.

Schwefel:

Schwefel ist ein Begleitelement von Stahl, welches bei Stählen der hier in Rede stehenden Art in hohem Maße Seigerungen verursacht. Gleichzeitig ist Schwefel verantwortlich für Rotbrüchigkeit des Stahls. Um diese negativen Auswirkungen zu vermeiden, ist der S-Gehalt auf höchstens 0,03 Gew.-%, insbesondere höchstens 0,025 Gew.-%, beschränkt, wobei S-Gehalte von mindestens 0,0005 Gew.-%, insbesondere mindestens 0,001 Gew.-%, für die Eigenschaften der erfindungsgemäßen Stähle herstellungsbedingt typisch sind.

Aluminium:

Aluminium wird bei der Stahlerzeugung als starkes Desoxidationsmittel zur Stahlberuhigung eingesetzt. Aluminium bildet außerdem mit Stickstoff Nitride. Dadurch begünstigt es auch die Alterungsunempfindlichkeit des Stahls. In kleinen Zugaben unterstützt es zudem die Feinkornausbildung. Daher enthält ein erfindungsgemäß verarbeiteter Stahl 0,001 - 0,12 Gew.-% Al. Der positive Einfluss von Al auf die Eigenschaften erfindungsgemäß verarbeiteten Stahls kann dadurch besonders sicher genutzt werden, dass der Al-Gehalt mindestens 0,005 Gew.-% beträgt. Negative Auswirkungen der Anwesenheit von Al können dabei dadurch sicher vermieden werden, dass der Al-Gehalt des erfindungsgemäß verarbeiteten Stahls auf maximal 0,09 Gew.-% beschränkt wird.

Titan und Niob (optional zugegeben):

Titan in Gehalten von bis zu 0,15 Gew.-%, insbesondere bis zu 0,13 Gew.-%, oder Niob in Gehalten von bis zu 0,05 Gew.-%, insbesondere bis zu 0,01 Gew.-%, können alleine oder in Kombination miteinander im Stahl der erfindungsgemäß verarbeiteten Bramme vorhanden sein. Sie dienen zur teilweise oder vollständigen Abbindung von C und N und vermindern dadurch das Alterungspotential des Werkstoffes. Titan und Niob beeinflussen darüber hinaus die Festigkeit des Materials sowohl durch die Ausscheidungsbildung als auch durch Mischkristallverfestigung. Besonders positiv wirkt sich die Anwesenheit von Ti im erfindungsgemäß verarbeiteten Stahl bei Ti-Gehalten von mindestens 0,0001 Gew.-% aus. Nb-Gehalte von mindestens 0,0005 Gew.-% erweisen sich ebenfalls als besonders praxisgerecht.

Bor (optional zugegeben):

Der Gehalt an Bor ist auf 0,005 Gew.-%, insbesondere 0,004 Gew.-%, beschränkt, weil B bei Stählen der hier in Rede stehenden Art die Umformeigenschaften, insbesondere den r-Wert, des erfindungsgemäßen Stahls verschlechtert. Geringe Zugaben an B können jedoch zur Vermeidung von Sprödbruchneigung beitragen. Hierzu können im erfindungsgemäßen Stahl mindestens 0,0002 Gew.-% B vorgesehen sein.

Kupfer, Chrom, Nickel, Molybdän, und Zinn (optional zugegeben):
Cu, Cr, Ni, Mo oder Sn sind im Stahl der erfindungsgemäß verarbeiteten Bramme den technisch unvermeidbaren, herstellungsbedingt in den Stahl gelangenden Verunreinigungen zuzuordnen. Ihre Gehalte sind, wie die Gehalte der anderen Verunreinigungen, im technisch sinnvollen und machbaren Maße so gering zu halten, dass sie keine störenden Einflüsse auf die Eigenschaften des erfindungsgemäß verarbeiteten Stahls haben. Hierzu sieht die Erfindung für die Cu-, Cr- und Ni-Gehalte eine Obergrenze von jeweils max. 0,15 Gew.-%, insbesondere von max. 0,12 Gew.-%, für den Mo-Gehalt eine Obergrenze von max. 0,10 Gew.-%, insbesondere max. 0,08 Gew.-%, und für den Sn-Gehalt eine Obergrenze von max. 0,05 Gew.-%, insbesondere max. 0,03 Gew.-%, vor.

Das Warmwalzen der in erfindungsgemäßer Weise vorgewärmten Bramme kann in an sich bekannter Weise durchgeführt werden. Im Rahmen des Warmwalzens kann die Bramme ein Vorwalzen durchlaufen, bei dem eine erste Dickenreduktion um 80 - 90 % erzielt wird. Die typischerweise mit einer Ausgangsdicke von 220 - 280 mm in das Vorwalzen einlaufenden Brammen werden ebenso typischerweise auf eine Vorbanddicke von 30 - 50 mm vorgewalzt.

Die jeweils vorgewalzte Bramme kann in einer konventionell ausgerüsteten Fertigwarmwalzstaffel in mehreren Stichen, typischerweise fünf oder sieben Stichen, auf an sich bekannte Weise zu einem Warmband mit der geforderten Enddicke von typischerweise 3 - 5 mm fertigwarmgewalzt werden. Der in der Fertigwarmwalzstaffel erzielte Umformgrad beträgt dabei typischerweise 85 - 95 %.

Beim letzten Walzstich des Warmwalzens werden die Walzparameter derart eingestellt, dass über den letzten Warmwalzstich eine Dickenreduktion $\Delta dF$ von 1 - 25 %, insbesondere 5 - 20 %, erzielt wird, wobei sich Dickenreduktionen $\Delta dF$ von 8 - 17 % hier als besonders günstig erweisen. Die Dickenabnahme $\Delta dF$ im letzten Fertiggerüst ist dabei ein direkter Indikator für den Umformgrad und verkörpert den letzten dynamischen Rekristallisationsschritt vor der ferritischen Umwandlung. Je niedriger dieser Umformgrad ist, desto niedriger ist auch die Triebkraft für eine Rekristallisation unmittelbar vor der ferritischen Umwandlung durch Abkühlung, d.h. ein eingefrorener Zwangszustand wird vermieden. Zudem bewirkt ein niedriger Umformgrad ein tendenziell eher globulares Austenitkorn. Diese Geometrie wird dann dem ferritischen Korn nach der Umwandlung vererbt. Globulare Körner sind tendenziell isotroper.

Der über das Warmwalzen (Vorwalzen + Fertigwalzen) insgesamt erzielte Umformgrad beträgt dann typischerweise 95 - 99,5 % bei einer Warmwalzendtemperatur, die ebenso typischerweise 850 - 950 °C, insbesondere 910 - 950 °C, beträgt. Die Warmwalzendtemperatur beeinflusst die Warmbandkorngröße. Die Korngröße wird von Keimbildung und Keimwachstum gesteuert. Je mehr Keime in Form von Ausscheidungen im Warmband vorhanden sind, desto geringer ist die Korngröße, da diese Keime als Wachstumsbremsen wirken. Je kleiner die Warmwalzendtemperatur ist, umso mehr Umwandlungskeime werden in Form von Ausscheidungen gebildet und umso kleiner ist die Warmbandkorngröße. Deshalb ist die Warmwalzendtemperatur erfindungsgemäß auf 950 °C beschränkt.

Nach Ende des Warmwalzens wird das aus dem letzten Gerüst der Warmwalzstaffel austretende Warmband mit einer Abkühlgeschwindigkeit von 4 - 30 K/s abgekühlt. Abkühlgeschwindigkeiten von 10 - 22 K/s haben sich hier als besonders günstig im Hinblick auf das erfindungsgemäße angestrebte Eigenschaftsprofil des herzustellenden Stahlflachprodukts herausgestellt. Tendenziell gilt hier, dass je schneller und somit größer die Abkühlrate ist, desto bessere Eigenschaften können am Endprodukt erzielt werden, da das Warmband-Kornwachstum gehemmt wird und es darüber hinaus zu weniger Oxidation kommt. Kleinere Warmband-Körner nehmen die Energie beim anschließenden Kaltwalzprozess besser auf und zeigen folglich auch mehr Triebkraft beim anschließenden Rekristallisationsprozess, was die Isotropie verbessert und damit den Ar-Wert verringert. Zudem gibt es weniger störende Oxide im oberflächennahen Bereich. Die nach dem Kaltwalzprozess durchgeführte Rekristallisation wird dementsprechend in diesem Bereich kaum behindert. Dies hat ein tendenziell eher globulares Korn im oberflächennahen Bereich und damit einhergehend eine gleichmäßige Nanohärte über die Blechdicke zur Folge. Bei zu hohen Abkühlraten > 30 K/s würde das Material fester, bei zu geringen Abkühlraten < 4 K/s eher weicher, was die mechanischen Eigenschaften negativ beeinflussen würde.

Die Kühlung nach dem Warmwalzen wird bevorzugt "von vorne", d.h. im möglichst unmittelbaren Anschluss an das Warmwalzen, also beispielsweise innerhalb von 0 - 4 Sekunden nach Ende des Warmwalzens, durchgeführt. Es ist jedoch auch möglich, eine Kühlung "von hinten", d.h. in einem gewissen zeitlichen Abstand nach dem Warmwalzen, durchzuführen, also beispielsweise die Kühlung nach einer Pausenzeit von mehr als 4 Sekunden zu beginnen.

Im Zuge der Abkühlung wird das Warmband auf eine Haspeltemperatur von typischerweise 620 - 780 °C abgekühlt. Dieser Temperaturbereich ist ebenfalls im Hinblick auf das Kornwachstum im Warmband gewählt worden. Denn auch die Haspeltemperatur beeinflusst die Warmbandkorngröße. Bei zu hoher Haspeltemperatur wird das Kornwachstum angeregt. Daher erweist sich ein Haspeltemperaturbereich von 700 - 750 °C als für die erfindungsgemäßen Zwecke besonders günstig. Dabei ist auch der erfindungsgemäß für die Haspeltemperatur vorgegebene Bereich unter Berücksichtigung der Ausscheidungszustände gewählt, die durch die von der Erfindung genutzten und erfindungsgemäß eingestellten Zusammenhänge zwischen der Brammenziehtemperatur BZT und der Gesamtliegezeit GLZ erzielt werden. Durch eine hohe Haspeltemperatur wird zudem die Bildung von feinstverteilten Ti-Ausscheidungen im oberflächennahen Bereich begünstigt. Bei diesen Ausscheidungen handelt es sich überwiegend um Ti-Oxide, die nach dem Kaltwalzprozess an Ort und Stelle verweilen. Bei der anschließenden rekristallisierenden Glühung behindern diese dann die oberflächennahe Kornlage bei der Rekristallisation, so dass dort tendenziell nur erholte, relativ langgestreckte Körner mit einer hohen Versetzungsdichte vorhanden sind, die die Festigkeit und damit auch die Härte im oberflächennahen Bereich in die Höhe treiben.

Vor dem Kaltwalzen wird das Warmband wie üblich von auf ihm haftenden Zunder und sonstigen Rückständen befreit, wozu beispielsweise eine konventionelle Beizbehandlung zum Einsatz kommt.

Das anschließende Kaltwalzen kann in ebenso üblicher Weise durchgeführt werden. Die dabei erzielten Gesamtumformgrade liegen im Bereich von 70 - 90 %.

Beim erfindungsgemäß durchgeführten rekristallisierenden Glühen werden Glühtemperaturen von 650 bis 900 °C, insbesondere 720 und 880 °C, eingestellt.

Der Anstieg des Wsa-Wertes über eine Umformung kann besonders effektiv dadurch vermindert werden, dass die Glühung unter einer Glühatmosphäre mit vergleichsweise hohem Taupunkt von mehr als -15 °C durchgeführt wird, da dann ca. 10 ppm Kohlenstoff in einem sich über eine Tiefe von 10 - 50 $\mu$m erstreckenden oberflächennahen Bereich entfernt wird. Hierzu kann das rekristallisierende Glühen im Durchlauf bei einer Glühtemperatur von 650 - 870 °C bei einer Durchlaufgeschwindigkeit von 70 - 180 m/min und einem Taupunkt der Glühatmosphäre von +15 °C bis -50 °C erfolgen.

Besteht die Bramme aus einer beispielsweise für einen Bake-Hardening-Stahl mit minimiertem C-Gehalt oder einen ULC-Stahl typischen Zusammensetzung, so kann es, auch wenn dies zu Lasten der Bake-Hardening-Eigenschaften gehen kann, im Hinblick auf eine Optimierung des Wsa-Werts zweckmäßig sein, den freien C-Gehalt an der Oberfläche zu verringern, um die Festigkeitseigenschaften im oberflächennahen Bereich dem Volumen des Bleches anzugleichen. Dies kann durch eine optimaler Weise im Durchlauf und in Kombination mit dem rekristallisierenden Glühen absolvierten entkohlenden Glühung erfolgen, bei der das kaltgewalzte Stahlflachprodukt bei Glühtemperaturen, die im Bereich von 650 °C - 870 °C liegen, insbesondere mindestens 800 °C betragen, und einer Durchlaufgeschwindigkeit von 70 - 180 m/min unter einer Glühatmosphäre geglüht wird, deren Taupunkte im Bereich von +15 °C bis -50 °C, beispielsweise -15 °C bis -50 °C liegen. So kann eine Entkohlung von > 60 % bei einer Glühtemperatur von 870 °C, einer Durchlaufgeschwindigkeit von 70 m/min und einem Taupunkt von 0 °C erreicht werden. Dagegen liefert eine Glühtemperatur von 830 °C bei einer Durchlaufgeschwindigkeit von 90 m/min und einem Taupunkt der Glühatmosphäre von -50 °C eine Entkohlung von ca. 30 %.

Besteht die Bramme aus einer für einen IF-Stahl typischen Zusammensetzung, so kann bei Glühtemperaturen von 650 - 870 °C der Taupunkt der Glühatmosphäre typischerweise mit -10 °C und -50 °C gewählt werden. In IF-Stahl ist der Kohlenstoff in Form von Ausscheidungen abgebunden. IF-Stahl enthält folglich keinen freien Kohlenstoff, so dass keine Entkohlung stattfinden kann. Der Taupunkt der Glühatmosphäre ist daher frei wählbar.

Zur Verbesserung der Maßhaltigkeit und Optimierung der Oberflächenbeschaffenheit wird ein erfindungsgemäß erzeugtes Stahlflachprodukt in an sich bekannter Weise einem Dressierwalzen unterzogen, bei dem es typischerweise mit Dressiergraden von mindestens 0,3 %, insbesondere mindestens 0,5 %, und max. 2,0 % dressiergewalzt wird. Wird ein Stahl mit einer für einen Bake-Hardening-Stahl typischen Zusammensetzung verarbeitet, so kann das Dressierwalzen mit höheren Dressiergraden, beispielsweise mit Dressiergraden von mehr als 0,75 %, insbesondere mehr als 1 %, durchgeführt werden. Werden dagegen Stähle mit einer für weiche IF-Stähle typischen Zusammensetzung verarbeitet, so kann der Dressiergrad auf typische 0,5 - 1 %, insbesondere bis zu 0,7 %, eingestellt werden.

Um die erfindungsgemäße Oberflächenbeschaffenheit durch den erfindungsgemäß vorgesehenen Dressierprozess mit einem Dressiergrad von mindestens 0,5 % sicher zu erreichen, kann eine Arbeitswalze mit einer durch Electrical Discharge Texturing ("EDT") erzeugten, durch Ra-Werte kleiner 2,7 $\mu$m und einer Spitzenzahl von mehr als 70 1/cm gekennzeichneten Rauheit eingesetzt werden.

Bei Zink-, Zink-Magnesium-basierten oder für eine Galvannealing-Behandlung vorgesehenen Schmelztauchüberzügen kann die Beschichtung nach dem Kaltwalzprozess und vor dem Dressierprozess aufgebracht werden. Bei elektrolytisch zu beschichtenden Stahlflachprodukten kann die Beschichtung nach dem Dressierprozess erfolgen, wobei das Dressieren wiederum nach einer Glühbeharidlung durchgeführt wird. Die Glühbehandlung kann als Haubenglühung oder als kontinuierliche Glühung ausgeführt werden. Ein mit einer entsprechend aufgebrachten Schicht versehenes erfindungsgemäßes Stahlflachprodukt weist typischerweise einen Wsa$_{mod}$-Wert kleiner 0,30 $\mu$m, insbesondere kleiner 0,25 $\mu$m auf.

Erfindungsgemäß wird angestrebt, den jeweiligen Wsa-Wert "Wsa1-5" bzw. "Wsa_mod" so gering wie möglich zu halten. Jedenfalls hat der jeweilige Wsa(1-5) eines erfindungsgemäß erzeugten und beschaffenen Stahlflachprodukts jeweils weniger 0,35 $\mu$m betragen, so dass die in der Praxis geltenden Vorgaben für Stahlflachprodukte sicher erfüllt werden, die für die Herstellung von Karosserieaußenhautbauteilen bestimmt sind. Diese Maßgabe gilt insbesondere für den Wsa(1-5)-Wert, der in der eingangs erläuterten Weise an einem 5 %-verformten Marciniaknapf ermittelt werden.

Je geringer der Wsa(1-5)-Wert des erfindungsgemäßen Stahlflachprodukts ist, desto geringer ist die Wahrscheinlichkeit, dass am aus dem erfindungsgemäßen Stahlflachprodukt durch Umformung erzeugten Bauteil eine störende, über das zulässige Maß hinausgehende Welligkeit auftritt. Als optimal anzusehen sind deshalb Wsa1-5-Werte, die möglichst nahe an 0 μm liegen. Deshalb erstrecken sich die erfindungsgemäß für den Wsa(1-5)-Wert zugelassenen Zahlenwerte über den Bereich 0 μm - < 0,35 μm und für den Wert Wsa$_{mod}$ über den Bereich 0 μm - < 0,3 μm. Wie immer bei der Angabe von Bereichsgrenzen versteht es sich hierbei für den Fachmann von selbst, das beispielsweise die Maßgabe "0 μm" für die Untergrenze des erfindungsgemäß für den jeweiligen Wsa-Wert vorgesehenen Bereichs im technischen Sinne zu verstehen ist, also auch im Rahmen der Genauigkeit, mit der der betreffende Grenzwert angegeben ist, liegende, toleranzbedingte Abweichungen umfasst. Typischerweise liegt in der Praxis die Untergrenze der für den jeweiligen Wsa-Wert ermittelten Werte bei 0,2 μm, insbesondere 0,22 μm.

Zum Nachweis der Wirkung der Erfindung sind für die Versuche 1 - 8, 10 - 25 und 27 - 30 Schmelzen mit den in Tabelle 2 angegebenen Zusammensetzungen erschmolzen und zu Brammen vergossen worden.

In Tabelle 2 ist dabei mit Stahlsorte "A" eine unter die in Tabelle 1 angegebene Stahllegierung fallende Zusammensetzung für einen weichen IF-Stahl, mit Stahlsorte "B" eine unter die in Tabelle 1 angegebene ULC-BH-Stahllegierung fallende Zusammensetzung und mit Stahlsorte "C" eine unter die in Tabelle 1 angegebene ELC-Stahllegierung fallende Zusammensetzung bezeichnet.

Die Brammen sind in einem Ofen jeweils über die in Tabelle 3 angegebene Gesamtliegezeit GLZ auf die in Tabelle 3 ebenfalls angegebene Brammenziehtemperatur Bzt erwärmt worden. Anschließend haben sie ein konventionelles Warmwalzprogramm durchlaufen, um zu jeweils einem warmgewalzten Band warmgewalzt zu werden. Die über den letzten Walzstich des Warmwalzens, d.h. im letzten Walzgerüst der Warmwalzfertigstraße, erzielte Umformung ΔdF ist in Tabelle 3 ebenso angegeben.

Das so jeweils erhaltene Warmband "WB" ist anschließend auf eine jeweilige für Stähle der in Rede stehenden Art typische, in Tabelle 3 jeweils genannte Haspeltemperatur HT in an sich ebenfalls konventioneller Weise abgekühlt worden, wobei die Kühlung entweder innerhalb von 0 - 4 Sekunden (Kühlstrategie "V") oder innerhalb von mehr als 4 Sekunden bis zu 15 Sekunden (Kühlstrategie "H") nach dem Ende des Warmwalzens eingesetzt hat. Die jeweilige Kühlstrategie ist ebenfalls in Tabelle 3 eingetragen. Anschließend sind die so erhaltenen warmgewalzten Bänder im kontinuierlichen Betrieb zu kaltgewalzten Bändern KB kaltgewalzt worden. Der Kaltwalzgrad betrug 70 - 90 %. Die Dicke des erhaltenen Kaltbands lag bei 0,5 - 1,1 mm.

Nach dem Kaltwalzen wurden die erhaltenen Kaltbänder in einer Feuerbeschichtungsanlage schmelztauchbeschichtet. Dazu wurden die Bänder zunächst gereinigt, um Schmutz, Fett, Walzstaub und Emulsionsrückstände von ihrer Oberfläche zu entfernen. Danach wurden die Kaltbänder in einem Durchlaufofen rekristallisierend geglüht und danach in einem Zink-Bad mit 0,2 Gew.-% Al, Spuren von Fe und Pb, Rest.Zn und unvermeidbaren Verunreinigungen, beschichtet. Die Auflagendicke wurde mittels eines konventionellen Düsenabstreifprozesses auf Werte zwischen 1 bis 15 μm eingestellt.

Die an den kaltgewalzten und beschichteten Bändern KB jeweils ermittelten, die Welligkeit nach einer 5 %-Verformung wesentlich beeinflussenden Kontroll- und Kenngrößen Warmbandkorngröße "WB-Korngröße", Kaltbandtextur {111} <110> "KB-Textur{111} <110>", mittlere Größe der Ausscheidungen im Kaltband "Mittlere Größe der Ausscheidungen im KB [nm]", mittlerer Δr-Wert des Kaltbands "Mittlerer Δr KB", Wsa(1-5)-Wert des unverformten Stahlflachprodukts "Wsa 0 %"; Wsa(1-5-5 %)-Wert des mit einer 5 %-Verformung zu einem Marciniaknapf verformten Stahlflachprodukts "Wsa 5 %", die Differenz "ΔWsa" zwischen dem Wsa-0 % und dem Wsa-5 %, der Wsa-Wert der Beschichtung "Wsa$_{mod}$", die Nanohärte des eines oberflächenfernen Bereichs H_Bulk "Nanohärte H_Bulk ; die "Nanoindentation ΔH", sowie die durch eine HTL-Messung ermittelte, nach 2000 s bei 650 °C eintretende Entfestigung "HTL-Messung Entfestigung nach 2000 s bei 650 °C" sind in Tabelle 4 angegeben. Dabei sind die Positionen in den Tabellen, zu denen bei der Auswertung des jeweiligen Versuchs keine Werte ermittelt worden sind, durch "\" gekennzeichnet.

Tabelle 1

|   | Weicher IF | ULC-BH | ELC |
|---|---|---|---|
| C | 0,0003 - 0,02 | 0,0004 - 0,010 | 0,009 - 0,05 |
| Si | 0,0005 - 0,20 | 0,0005 - 0,20 | 0,0001 - 0,12 |
| Mn | 0,01 - 0,35 | 0,05 - 1,5 | 0,05 - 0,5 |
| P | 0,001 - 0,025 | 0,001 - 0,10 | 0,001 - 0,04 |
| s | 0,005 - 0,03 | 0,0005 - 0,03 | 0,0005 - 0,03 |
| Al | 0,001 - 0,10 | 0,005 - 0,12 | 0,001 - 0,1 |
| N | 0,0001 - 0,01 | 0,0001 - 0,01 | 0,0001 - 0,01 |

(fortgesetzt)

|  | Weicher IF | ULC-BH | ELC |
|---|---|---|---|
| **Ti** | 0,01 - 0,15 | 0,0001 - 0,015 | max. 0,015 |
| **Nb** | max. 0,05 | 0,0001 - 0,03 | max. 0,015 |
| **B** | max. 0,0015 | max. 0,0015 | max. 0,005 |
| **Cu** | max. 0,15 | max. 0,15 | max. 0,15 |
| **Cr** | max. 0,15 | max. 0,15 | max. 0,15 |
| **Ni** | max. 0,15 | max. 0,15 | max. 0,15 |
| **Mo** | max. 0,10 | max. 0,10 | max. 0,1 |
| **Sn** | max. 0,05 | max. 0,05 | max. 0,05 |
| Angaben in Gew.-%, Rest Fe und unvermeidbare Verunreinigungen | | | |

**Tabelle 2**

| Versuch | Schmelze | Stahl-sorte | C | Si | Mn | P | S | Al | N | Nb | Ti |
|---|---|---|---|---|---|---|---|---|---|---|---|
| 1 | 1 | A | 0,0033 | 0,007 | 0,15 | 0,012 | 0,006 | 0,047 | 0,0024 | 0,002 | 0,076 |
| 2 | 2 | A | 0,0023 | 0,005 | 0,13 | 0,009 | 0,006 | 0,028 | 0,0024 | 0,001 | 0,074 |
| 3 | 3 | A | 0,002 | 0,006 | 0,12 | 0,008 | 0,007 | 0,023 | 0,0027 | 0,002 | 0,076 |
| 4 | 4 | A | 0,0022 | 0,005 | 0,12 | 0,008 | 0,007 | 0,023 | 0,003 | 0,002 | 0,075 |
| 5 | 5 | A | 0,0018 | 0,006 | 0,12 | 0,008 | 0,007 | 0,023 | 0,0026 | 0,002 | 0,075 |
| 6 | 3 | A | 0,0021 | 0,005 | 0,13 | 0,009 | 0,007 | 0,025 | 0,0031 | 0,002 | 0,076 |
| 7 | 6 | A | 0,0024 | 0,006 | 0,14 | 0,012 | 0,008 | 0,028 | 0,002 | 0,002 | 0,07 |
| 8 | 7 | A | 0,0024 | 0,005 | 0,15 | 0,008 | 0,01 | 0,033 | 0,0027 | 0,002 | 0,077 |
| 10 | 9 | A | 0,0025 | 0,005 | 0,16 | 0,009 | 0,008 | 0,029 | 0,0023 | 0,002 | 0,072 |
| 11 | 11 | B | 0,0018 | 0,005 | 0,28 | 0,02 | 0,008 | 0,05 | 0,0015 | 0,0015 | 0,0005 |
| 12 | 12 | B | 0,0019 | 0,005 | 0,28 | 0,02 | 0,009 | 0,05 | 0,0014 | 0,0018 | 0,0006 |
| 13 | 13 | **C** | 0,0203 | 0,005 | 0,21 | 0,01 | 0,006 | 0,046 | 0,0016 | 0 | 0,0003 |
| 14 | 14 | **C** | 0,02 | 0,005 | 0,17 | 0,009 | 0,006 | 0,047 | 0,0017 | 0 | 0,0003 |
| 15 | 15 | C | 0,0188 | 0,005 | 0,19 | 0,008 | 0,006 | 0,043 | 0,0015 | 0 | 0,0005 |
| 16 | 16 | C | 0,0204 | 0,005 | 0,2 | 0,008 | 0,004 | 0,042 | 0,0018 | 0 | 0,0006 |
| 17 | 17 | A | 0,0018 | 0,005 | 0,15 | 0,01 | 0,009 | 0,027 | 0,0024 | 0,002 | 0,079 |
| 18 | 18 | A | 0,002 | 0,004 | 0,16 | 0,011 | 0,008 | 0,04 | 0,0024 | 0,002 | 0,078 |
| 19 | 19 | A | 0,0021 | 0,005 | 0,15 | 0,007 | 0,009 | 0,03 | 0,0025 | 0,002 | 0,074 |
| 20 | 20 | A | 0,0023 | 0,004 | 0,13 | 0,006 | 0,005 | 0,04 | 0,0025 | 0,002 | 0,077 |
| 21 | 21 | A | 0,0022 | 0,005 | 0,13 | 0,008 | 0,007 | 0,023 | 0,0026 | 0,002 | 0,075 |
| 22 | 22 | A | 0,0028 | 0,018 | 0,12 | 0,009 | 0,01 | 0,025 | 0,0023 | 0,001 | 0,073 |
| 23 | 22 | A | 0,0021 | 0,081 | 0,11 | 0,008 | 0,007 | 0,019 | 0,0021 | 0,002 | 0,056 |
| 24 | 23 | A | 0,0025 | 0,081 | 0,11 | 0,008 | 0,007 | 0,019 | 0,0021 | 0,002 | 0,056 |
| 25 | 24 | A | 0,0025 | 0,007 | 0,14 | 0,008 | 0,007 | 0,035 | 0,0024 | 0,002 | 0,079 |
| 27 | 28 | B | 0,0014 | 0,004 | 0,26 | 0,02 | 0,006 | 0,056 | 0,0027 | 0,0012 | 0,0003 |

(fortgesetzt)

| Versuch | Schmelze | Stahl-sorte | C | Si | Mn | P | S | Al | N | Nb | Ti |
|---------|----------|-------------|-----|-----|-----|-----|-----|-----|-----|-----|-----|
| 28 | 29 | C | 0,0223 | 0,006 | 0,18 | 0,007 | 0,007 | 0,048 | 0,0022 | 0 | 0,0004 |
| 29 | 30 | C | 0,0208 | 0,005 | 0,2 | 0,008 | 0,004 | 0,044 | 0,0018 | 0 | 0,0006 |
| 30 | 31 | C | 0,0199 | 0,004 | 0,19 | 0,009 | 0,007 | 0,058 | 0,0018 | 0 | 0,0004 |
| Angaben in Gew.-%, Rest Eisen und unvermeidbare Verunreinigungen einschl. Gehalte an Cu, Cr, Ni, Mo, Sn | | | | | | | | | | | |

**Tabelle 3**

| Versuch | Schmelze | Liegezeit Gesamt [min] | Brammenziehtemp. [°C] | Kühlstrategie | HT [°C] | $\Delta$dF [%] | Erfindungsgemäß? |
|---|---|---|---|---|---|---|---|
| 1 | 1 | 269 | 1254 | H | 755 | 14,27 | Nein |
| 2 | 2 | 495 | 1296 | H | 745 | 12,60 | Nein |
| 3 | 3 | 353 | 1296 | H | 730 | 11,31 | Nein |
| 4 | 4 | 259 | 1285 | H | 740 | 13,01 | Nein |
| 5 | 5 | 348 | 1278 | H | 735 | 11,15 | Nein |
| 6 | 3 | 310 | 1298 | H | 745 | 11,60 | Nein |
| 7 | 6 | 368 | 1306 | H | 750 | 11,94 | Nein |
| 8 | 7 | 203 | 1267 | H | 630 | 13,70 | Ja |
| 10 | 9 | 386 | 1262 | H | 625 | 13,98 | Ja |
| 11 | 11 | 261 | 1299 | V | 730 | 15,40 | Nein |
| 12 | 12 | 258 | 1312 | V | 725 | 16,01 | Nein |
| 13 | 13 | 265 | 1261 | V | 765 | 14,21 | Nein |
| 14 | 14 | 459 | 1301 | V | 775 | 15,19 | Nein |
| 15 | 15 | 509 | 1272 | V | 772 | 16,01 | Nein |
| 16 | 16 | 248 | 1243 | V | 775 | 15,18 | Nein |
| 17 | 17 | 130 | 1206 | V | 663 | 9,14 | Ja |
| 18 | 18 | 135 | 1220 | V | 688 | 8,98 | Ja |
| 19 | 19 | 187 | 1269 | V | 670 | 9,09 | Ja |
| 20 | 20 | 139 | 1223 | V | 754 | 10,21 | Ja |
| 21 | 21 | 186 | 1219 | V | 752 | 9,76 | Ja |
| 22 | 22 | 198 | 1255 | V | 754 | 10,53 | Ja |
| 23 | 22 | 177 | 1261 | V | 727 | 10,47 | Ja |
| 24 | 23 | 288 | 1257 | V | 742 | 8,37 | Ja |
| 25 | 24 | 184 | 1255 | V | 724 | 9,49 | Ja |
| 27 | 28 | 230 | 1210 | V | 726 | 11,73 | Nein |

(fortgesetzt)

| Versuch | Schmelze | Liegezeit Gesamt [min] | Brammenziehtemp. [°C] | Kühlstrategie | HT [°C] | ΔdF [%] | Erfindungsgemäß? |
|---|---|---|---|---|---|---|---|
| 28 | 29 | 198 | 1234 | V | 770 | 11,97 | Nein |
| 29 | 30 | 189 | 1224 | V | 776 | 14,87 | Nein |
| 30 | 31 | 206 | 1193 | V | 767 | 15,53 | Nein |

**Tabelle 4**

| Versuch | Schmelze | WB-Korngröße [µm] | KB-Textur {111}<110> [Peak] | Mittlere Größe der Ausscheidungen im KB [nm] | Δr KB | Wsa 0 % [µm] | Wsa 5 % [µm] | Δwsa [µm] | Wsa_mod | Nanohärte H_Bulk [GPa] | Nanoindentation ΔH (H_25µm−H_Bulk) [GPa] | HTL-Messung Entfestigung nach 2000 s bei 650 °C [%] | Erfindung |
|---|---|---|---|---|---|---|---|---|---|---|---|---|---|
| 1 | 1 | 18,5 | 10,6 | ca. 5 – 30 | 0,54 | 0,20 | 0,29 | 0,09 | 0,32 | — | — | 62,00 | Nein |
| 2 | 2 | 23,8 | 10,6 | — | 0,62 | 0,19 | 0,34 | 0,14 | 0,34 | 1,5 | 0,41 | 66,00 | Nein |
| 3 | 3 | 28,9 | 11,7 | — | 0,60 | 0,31 | 0,38 | 0,07 | 0,31 | 1,6 | 0,63 | 65,00 | Nein |
| 4 | 4 | 20,8 | 11,9 | ca. 5 – 30 | 0,75 | 0,31 | 0,49 | 0,17 | 0,37 | 1,5 | 0,42 | 70,00 | Nein |
| 5 | 5 | 28,0 | — | ca. 5 – 30 | 0,71 | 0,32 | 0,44 | 0,12 | 0,33 | 1,6 | 0,72 | 64,00 | Nein |
| 6 | 3 | 24,9 | — | ca. 5 – 30 | 0,75 | 0,31 | 0,40 | 0,09 | 0,30 | 1,6 | 0,44 | 64,00 | Nein |
| 7 | 6 | 19,0 | — | — | 0,64 | 0,29 | 0,36 | 0,07 | 0,32 | 1,5 | 0,72 | 60,00 | Nein |
| 8 | 7 | 14,3 | 10,5 | ca. 70 – 90 | 0,49 | 0,35 | 0,32 | -0,03 | 0,24 | 1,6 | 0,05 | 86,00 | Ja |
| 10 | 9 | 15,3 | — | ca. 60 | 0,40 | 0,33 | 0,32 | -0,01 | 0,26 | 1,6 | -0,2 | 93,00 | Ja |
| 11 | 11 | 18,5 | — | — | 0,93 | 0,32 | 0,42 | 0,11 | 0,31 | — | — | — | Nein |
| 12 | 12 | 18,3 | — | — | 0,93 | 0,32 | 0,53 | 0,21 | 0,37 | — | — | — | Nein |
| 13 | 13 | 20,3 | — | — | 0,55 | 0,24 | 0,32 | 0,08 | 0,32 | — | — | — | Nein |
| 14 | 14 | 21,6 | — | — | 0,67 | 0,24 | 0,32 | 0,08 | 0,31 | — | — | — | Nein |
| 15 | 15 | 18,8 | — | — | 0,73 | 0,24 | 0,30 | 0,06 | 0,30 | — | — | — | Nein |
| 16 | 16 | 20,7 | — | — | 0,67 | 0,26 | 0,33 | 0,07 | 0,30 | 2,2 | 1,00 | — | Nein |
| 17 | 17 | 12,4 | 8,5 | ca. 60 | 0,42 | 0,21 | 0,22 | 0,01 | 0,26 | 1,6 | -0,07 | 94,00 | Ja |
| 18 | 18 | 11,6 | — | — | 0,30 | 0,29 | 0,31 | 0,02 | 0,28 | 1,6 | -0,06 | 93,00 | Ja |
| 19 | 19 | 12,0 | 10,3 | ca. 80 – 100 | 0,29 | 0,30 | 0,29 | -0,01 | 0,23 | 1,5 | 0,1 | — | Ja |
| 20 | 20 | 12,6 | — | ca. 60 | 0,42 | 0,33 | 0,30 | -0,03 | 0,25 | — | — | — | Ja |
| 21 | 21 | 14,4 | 9,9 | ca. 80 – 100 | 0,44 | 0,33 | 0,32 | -0,01 | 0,24 | 1,5 | -0,09 | 91,00 | Ja |
| 22 | 22 | 13,4 | — | ca. 80 – 100 | 0,21 | 0,34 | 0,28 | -0,05 | 0,25 | — | — | — | Ja |
| 23 | 22 | 22,8 | 10,4 | — | 0,34 | 0,32 | 0,29 | -0,03 | 0,24 | — | — | — | Ja |

(fortgesetzt)

| Versuch | Schmelze | WB-Korngröße [μm] | KB-Textur {111} <110> [Peak] | Mittlere Größe der Ausscheidungen im KB [nm] | $\Delta$r KB | Wsa 0 % [μm] | Wsa 5% [μm] | $\Delta$Wsa [μm] | WSa$_{mod}$ | Nanohärte H_Bulk [GPa] | Nanoindentation $\Delta$H (H_25Nm-H_Bulk) [GPa] | HTL-Messung Entfestigung nach 2000 s bei 650 °C [%] | Erfindung |
|---|---|---|---|---|---|---|---|---|---|---|---|---|---|
| 24 | 23 | 18,0 | 10,1 | ca. 80 -100 | 0,21 | 0,33 | 0,34 | 0,02 | 0,26 | 1,6 | -0,17 | 92,00 | Ja |
| 25 | 24 | 12,2 | 9,1 | ca. 80 - 100 | 0,26 | 0,26 | 0,26 | 0,00 | 0,25 | 1,6 | -0,18 | 93,00 | Ja |
| 27 | 28 | 22,9 | \ | \ | 0,84 | 0,29 | 0,40 | 0,12 | 0,35 | \ | \ | \ | Nein |
| 28 | 29 | 18,1 | \ | \ | 0,58 | 0,22 | 0,32 | 0,10 | 0,33 | 2,1 | 0,80 | \ | Nein |
| 29 | 30 | 23,2 | \ | \ | 0,65 | 0,24 | 0,39 | 0,15 | 0,35 | 2,0 | 0,70 | \ | Nein |
| 30 | 31 | 22,2 | \ | \ | 0,66 | 0,22 | 0,30 | 0,08 | 0,31 | 2,2 | 0,60 | \ | Nein |

"KB": kaltgewalztes Band; "WB": warmgewalztes Band, "\" = nicht bestimmt.

**Patentansprüche**

1. Verfahren zum Herstellen von Stahlflachprodukten, die nach einer fünfprozentigen biaxialen Verformung an mindestens einer ihrer Oberflächen einen Wsa(1-5)-Wert von weniger als 0,35 $\mu$m, eine planare Anisotropie $\Delta r$ von -0,5 bis +0,5 und in einem Bereich, der von der Oberfläche des jeweiligen Stahlflachprodukts bis zu einer Tiefe von weniger als 200 $\mu$m reicht, eine Nanohärte H von mehr als 0,1 GPa und weniger als 3,0 GPa aufweist, wobei

- der Wsa(1-5) Wert gemäß Stahl-Eisen-Prüfblatt SEP 1941, 1. Ausgabe, Mai 2012, in einer Messung längszur Walzrichtung,
- die planare Anisotropie $\Delta r$ gemäß DIN EN ISO 6892-1:2009 und
- die Nanohärte H gemäß DIN EN ISO 14577-1/-2/-4 bestimmt werden, umfassend folgende Arbeitsschritte:

a) Bereitstellen einer Bramme, die aus einem Stahl erzeugt ist, der aus , in Gew.-%,

| | |
|---|---|
| C: | 0,0003 - 0,050 % |
| Si: | 0,0001 - 0,20 % |
| Mn: | 0,01 - 1,5 % |
| P: | 0,001 - 0,10 % |
| S: | 0,0005 - 0,030 % |
| Al: | 0,001 - 0,12 % |
| N: | 0,0001 - 0,01 % |

sowie jeweils optional einem oder mehreren Elementen aus der Gruppe "Ti, Nb, B, Cu, Cr, Ni, Mo, Sn" mit der Maßgabe

| | |
|---|---|
| Ti: | 0,0001 - 0,15% |
| Nb: | 0,0001 - 0,05 % |
| B: | $\leq$ 0,005 % |
| Cu: | $\leq$ 0,15 % |
| Cr: | $\leq$ 0,15 % |
| Ni: | $\leq$ 0,15 % |
| Mo: | $\leq$ 0,10 % |
| Sn: | $\leq$ 0,05 % |

Rest Fe und unvermeidbare Verunreinigungen, besteht;
b) Erwärmen der Bramme in einem Ofen auf eine 1200 - 1270 °C betragende Brammenziehtemperatur Bzt, mit der die Bramme aus dem Ofen gezogen wird;
c) Warmwalzen der Bramme zu einem 3 - 5 mm dicken warmgewalzten Stahlflachprodukt, wobei das Warmwalzen ein Vorwalzen mit einer Dickenreduktion von 80 - 90 % und ein Fertigwalzen mit einer Dickenreduktion von 85 - 95 % umfasst, wobei der über das Warmwalzen insgesamt erzielte Umformgrad 95 - 99,5 % beträgt, wobei im letzten Walzstich eine Dickenreduktion $\Delta dF$ von 1 - 25 % erzielt wird und wobei die Warmwalzendtemperatur 850 - 950 °C beträgt;
d) Abkühlen des erhaltenen warmgewalzten Stahlflachprodukts auf eine Haspeltemperatur von 620 - 780 °C, wobei die Abkühlgeschwindigkeit 4 - 30 K/s beträgt;
e) Haspeln des warmgewalzten Stahlflachprodukts zu einem Coil;
f) Beizen des Warmbands zum Entfernen des Zunders;
g) Kaltwalzen des warmgewalzten Stahlflachprodukts zu einem kaltgewalzten Stahlflachprodukt, wobei der über das Kaltwalzen erzielte Gesamtumformgrad 70 - 90 % beträgt;
h) rekristallisierendes Glühen des kaltgewalzten Stahlflachprodukts bei einer Glühtemperatur von 650 - 900 °C, wobei das Glühen optional unter einer entkohlenden Glühatmosphäre durchgeführt wird;
i) optionales Dressierwalzen des kaltgewalzten Stahlflachprodukts mit einem Dressiergrad von 0,3 - 2,0 %;
wobei die Brammenziehtemperatur Bzt, die Gesamtliegezeit GLZ, die die Bramme zwischen ihrem Einstoßen und Ausziehen im Glühofen verbringt, die Dickenreduktion im letzten Warmwalzstich $\Delta dF$ und die Haspeltemperatur HT folgender Bedingung genügen:

$$-0{,}529653{*}Q + 0{,}944372{*}HT\_t + 0{,}711559 * \Delta dF\_t < -0{,}1889459$$

mit Q = ((Bzt/GLZ) - 5,55281 °C/min) / (1,777359 °C/min)
Bzt: Brammenziehtemperatur in °C
GLZ: Gesamtliegezeit in min
HT_t = (HT - 728,13030 °C) / 42,300114 °C
HT: Haspeltemperatur in °C
ΔdF_t = (ΔdF - 12,43384 %) / 2,306328 %
ΔdF: Dickenreduktion im letzten Warmwalzstich in %.

2. Verfahren nach Anspruch 1, **dadurch gekennzeichnet, dass** die Brammenziehtemperatur Bzt weniger als 1250 °C beträgt.

3. Verfahren nach einem der voranstehenden Ansprüche, **dadurch gekennzeichnet, dass** das rekristallisierende Glühen im Durchlauf bei einer Glühtemperatur von 650 - 870 °C bei einer Durchlaufgeschwindigkeit von 70 - 180 m/min und einem Taupunkt der Glühatmosphäre von +15 °C bis -50 °C erfolgt.

4. Verfahren nach einem der voranstehenden Ansprüche, **dadurch gekennzeichnet, dass** der beim Dressierwalzen erzielte Umformgrad 0,5 - 2 % beträgt.

5. Verfahren nach einem der voranstehenden Ansprüche, **dadurch gekennzeichnet, dass** das Stahlflachprodukt mit einer Korrosionsschutzbeschichtung belegt wird.

6. Verfahren nach Anspruch 5, **dadurch gekennzeichnet, dass** die Beschichtung eine Beschichtung auf Zn-Basis ist.

7. Kaltgewalztes Stahlflachprodukt, das aus einem Stahl hergestellt ist, der aus , in Gew.-%,

C: 0,0003 - 0,050 %
Si: 0,0001 - 0,20 %
Mn: 0,01 - 1,5 %
P: 0,001 - 0,10 %
S: 0,0005 - 0,030 %
Al: 0,001 - 0,12 %
N: 0,0001 - 0,01 %

sowie jeweils optional einem oder mehreren Elementen aus der Gruppe "Ti, Nb, B, Cu, Cr, Ni, Mo, Sn" mit der Maßgabe

Ti: 0,0001 - 0,15 %
Nb: 0,0001 - 0,05 %
B: ≤ 0,005 %
Cu: ≤ 0,15 %
Cr: ≤ 0,15 %
Ni: ≤ 0,15%
Mo: ≤ 0,10 %
Sn: ≤ 0,05 %

Rest Fe und unvermeidbare Verunreinigungen
besteht,
und
das an mindestens einer seiner Oberflächen bei einer fünfprozentigen biaxialen Verformung eine niedrige Welligkeit besitzt, die durch einen Wsa(1-5)-Wert von weniger als 0,35 μm gekennzeichnet ist, wobei das Stahlflachprodukt eine planare Anisotropie Δr von -0,5 bis +0,5 und in einem Bereich, der von der betreffenden Oberfläche des jeweiligen Stahlflachprodukts bis zu einer Tiefe von weniger als 200 μm reicht, eine Nanohärte H von mehr als 0,1 GPa und weniger als 3,0 GPa aufweist, wobei

- der Wsa(1-5) Wert gemäß Stahl-Eisen-Prüfblatt SEP 1941 1. Ausgabe, Mai 2012, in einer Messung längs zur Walzrichtung,
- die planare Anisotropie Δr gemäß DIN EN ISO 6892-1:2009 und
- die Nanohärte H gemäß DIN EN ISO 14577-1/-2/-4 bestimmt werden.

8. Stahlflachprodukt nach Anspruch 7, **dadurch gekennzeichnet, dass** der an seiner mindestens einen Oberfläche nach der fünfprozentigen biaxialen Verformung ermittelte Wsa(1-5)-Wert um maximal 0,05 μm höher ist als der Wsa(1-5)-Wert der betreffenden Oberfläche vor der Verformung.

9. Stahlflachprodukt nach Anspruch 7 oder 8, **dadurch gekennzeichnet, dass** die gemäß DIN EN IS 12047 ermittelte mittlere Größe der Ausscheidungen im Kaltband 60 - 150 nm beträgt.

**Claims**

1. Method for manufacturing flat steel products which, following a five per cent biaxial deformation, exhibit, on at least one of their surfaces, a Wsa(1-5) value of less than 0.35 μm, a planar anisotropy Δr of -0.5 to +0.5 and, in a region which extends from the surface of the respective flat steel product to a depth of less than 200 μm, a nanohardness H of more than 0.1 GPa and less than 3.0 GPa, wherein

- the Wsa(1-5) value is determined according to Stahl-Eisen-Prufblatt SEP 1941, 1st issue, May 2012 in a measurement lengthwise to the rolling direction
- the planar anisotropy Δr is determined according to DIN EN ISO 6892-1:2009 and
- the nanohardness H is determined according to DIN EN ISO 14577-1/-2/-4 comprising the following working steps:

a) Providing a slab which is made of a steel which consists, in % by weight, of

| | |
|---|---|
| C: | 0.0003 - 0.050% |
| Si: | 0.0001 - 0.20% |
| Mn: | 0.01 - 1.5% |
| P: | 0.001 - 0.10% |
| S: | 0.0005 - 0.030% |
| Al: | 0.001 - 0.12% |
| N: | 0.0001 - 0.01% |

as well as, in each case optionally, one or more elements from the group "Ti, Nb, B, Cu, Cr, Ni, Mo, Sn", provided that

| | |
|---|---|
| Ti: | 0.0001 - 0.15% |
| Nb: | 0.0001 - 0.05% |
| B: | ≤ 0.005% |
| Cu: | ≤ 0.15% |
| Cr: | ≤ 0.15% |
| Ni: | ≤ 0.15% |
| Mo: | ≤ 0.10% |
| Sn: | ≤ 0.05% |

the remainder consisting of Fe and unavoidable impurities;
b) heating the slab in a furnace to a slab drawing temperature Bzt of 1200-1270°C at which the slab is drawn out of the furnace;

c) hot-rolling the slab into a 3-5 mm thick hot-rolled flat steel product, wherein the hot-rolling comprises a rough rolling with a thickness reduction of 80 - 90% and a finishing rolling with a thickness reduction of 85 - 95%, wherein the overall degree of deformation achieved during the hot-rolling is 95 - 99.5%, wherein a thickness reduction $\Delta dF$ of 1 - 25% is achieved in the last roll pass and wherein the final hot-rolling temperature is 850 - 950°C;

d) cooling the obtained hot-rolled flat steel product to a coiling temperature of 620 - 780°C, wherein the cooling rate is 4 - 30 K/s;

e) coiling the hot-rolled flat steel product into a coil;

f) pickling the hot strip to remove the scale;

g) cold-rolling the hot-rolled flat steel product into a cold-rolled flat steel product, wherein the total degree of deformation achieved through the cold-rolling is 70 - 90%;

h) recrystallisation annealing of the cold-rolled flat steel product at an annealing temperature of 650 - 900°C, wherein the annealing is, optionally, carried out under a decarburising annealing atmosphere;

i) optional skin-pass rolling of the cold-rolled flat steel product with a skin pass level of 0.3 - 2.0%;

wherein the slab drawing temperature Bzt, the total residence time GLZ which the slab spends in the annealing furnace between being pushed in and drawn out, the thickness reduction in the last hot roll pass $\Delta dF$ and the coiling temperature HT satisfy the following condition:

$$-0.529653*Q + 0.944372*HT\_t + 0.711559 * \Delta dF\_t < -0.1889459$$

where
$Q =$  ((Bzt/GLZ) - 5.55281°C/min) / (1.777359°C/min)
Bzt:  slab drawing temperature in °C
GLZ:  total residence time in min
$HT\_t =$  (HT - 728.13030°C) / 42.300114°C
HT:  coiling temperature in °C
$\Delta dF\_t =$  ($\Delta dF$ - 12.43384%) / 2.306328%
$\Delta dF$:  thickness reduction in the last hot roll pass in %.

2. Method according to claim 1, **characterised in that** the slab drawing temperature Bzt is less than 1250°C.

3. Method according to any one of the preceding claims, **characterised in that** the recrystallisation annealing takes place in a throughfeed process at an annealing temperature of 650 - 870°C at a throughput speed of 70-180 m/min and a dew point of the annealing atmosphere of +15°C to -50°C.

4. Method according to any one of the preceding claims, **characterised in that** the degree of deformation achieved during skin-pass rolling is 0.5 - 2%.

5. Method according to any one of the preceding claims, **characterised in that** the flat steel product is coated with a corrosion protection coating.

6. Method according to claim 5, **characterised in that** the coating is a Zn-based coating.

7. Cold-rolled flat steel product which is made of a steel which consists, in % by weight, of

C:  0.0003 - 0.050%
Si:  0.0001 - 0.20%
Mn:  0.01 - 1.5%
P:  0.001 - 0.10%
S:  0.0005 - 0.030%
Al:  0.001 - 0.12%

(continued)

| | | |
|---|---|---|
| N: | 0.0001 - 0.01 % | |

as well as, in each case optionally, one or more elements from the group "Ti, Nb, B, Cu, Cr, Ni, Mo, Sn", provided that

| | |
|---|---|
| Ti: | 0.0001 - 0.15% |
| Nb: | 0.0001 - 0.05% |
| B: | ≤ 0.005% |
| Cu: | ≤ 0.15% |
| Cr: | ≤ 0.15% |
| Ni: | ≤ 0.15% |
| Mo: | ≤ 0.10% |
| Sn: | ≤ 0.05% |

the remainder consisting of Fe and unavoidable impurities
and
which possesses, on at least one of its surfaces, at a five per cent biaxial deformation, a low waviness which is **characterised by** a Wsa(1-5) value of less than 0.35 $\mu$m, wherein the flat steel product exhibits a planar anisotropy $\Delta$r of -0.5 to +0.5 and, in a region which extends from the relevant surface of the respective flat steel product to a depth of less than 200 $\mu$m, a nanohardness H of more than 0.1 GPa and less than 3.0 GPa, wherein

- the Wsa(1-5) value is determined according to Stahl-Eisen-Prufblatt SEP 1941, 1st issue, May 2012 in a measurement lengthwise to the rolling direction
- the planar anisotropy $\Delta$r is determined according to DIN EN ISO 6892-1:2009 and
- the nanohardness H is determined according to DIN EN ISO 14577-1/-2/- 4.

**8.** Flat steel product according to claim 7, **characterised in that** the Wsa(1-5) value determined on its at least one surface following the five per cent biaxial deformation is higher by a maximum of 0.05 $\mu$m than the Wsa(1-5) value of the surface in question prior to deformation.

**9.** Flat steel product according to any one of the claims 7 or 8, **characterised in that** the average size of the precipitates in the cold strip determined according to DIN EN IS 12047 is 60 - 150 nm

**Revendications**

**1.** Procédé de fabrication de produits plats en acier qui, après une déformation biaxiale de cinq pour cent, présentent sur au moins une de leurs surfaces une valeur Wsa(1-5) inférieure à 0,35 $\mu$m, une anisotropie planaire $\Delta$r de -0,5 à +0,5 et, dans une zone qui s'étend depuis la surface du produit plat en acier respectif jusqu'à une profondeur inférieure à 200 $\mu$m, une nanodureté H supérieure à 0,1 GPa et inférieure à 3,0 GPa, dans lequel

- la valeur Wsa(1-5) selon la fiche d'essai acier-fer SEP 1941, 1ère édition, mai 2012, dans une mesure dans le sens du laminage,
- l'anisotropie plane $\Delta$r selon la norme DIN EN ISO 6892-1:2009 et
- la nanodureté H selon la norme DIN EN ISO 14577-1/-2/-4-sont déterminées, comprenant les étapes de travail suivantes :

a) fourniture d'une brame réalisée à partir d'un acier et composée de, en % en poids,

| | |
|---|---|
| C : | 0,0003 à 0,050 % |
| Si : | 0,0001 à 0,20 % |
| Mn : | 0,01 à 1,5 % |
| P: | 0,001 à 0,10 % |
| S : | 0,0005 à 0,030 % |
| Al : | 0,001 à 0,12 % |

(suite)

N :          0,0001 à 0,01 %

et éventuellement respectivement d'un ou de plusieurs éléments du groupe constitué par « Ti, Nb, B, Cu, Cr, Ni, Mo, Sn » tant que

| | |
|---|---|
| Ti: | 0,0001 à 0,15 % |
| Nb : | 0,0001 à 0,05 % |
| B : | $\leq$ 0,005 % |
| Cu: | $\leq$ 0,15% |
| Cr: | $\leq$ 0,15 % |
| Ni: | $\leq$ 0,15% |
| Mo: | $\leq$ 0,10% |
| Sn: | $\leq$ 0,05 % |

d'un reste Fe et d'impuretés inévitables ;

b) chauffage de la brame dans un four à une température d'étirage de brame Bzt de 1 200 à 1 270 °C, à laquelle la brame est étirée hors du four ;

c) laminage à chaud de la brame en un produit plat en acier laminé à chaud de 3 à 5 mm d'épaisseur, le laminage à chaud comprenant un pré-laminage avec une réduction d'épaisseur de 80 à 90 % et un laminage de finition avec une réduction d'épaisseur de 85 à 95 %, le degré de déformation obtenu au total par le laminage à chaud étant de 95 à 99,5 %, une réduction d'épaisseur $\Delta dF$ de 1 à 25 % étant obtenue lors de la dernière passe de laminage et la température finale de laminage à chaud étant de 850 à 950 °C ;

d) refroidissement du produit plat en acier laminé à chaud obtenu à une température d'enroulement de 620 à 780 °C, la vitesse de refroidissement étant de 4 à 30 K/s ;

e) enroulement du produit plat en acier laminé à chaud en une bobine ;

f) décapage de la bande chaude pour éliminer la calamine ;

g) laminage à froid du produit en acier plat laminé à chaud en un produit en acier plat laminé à froid, le degré de déformation total obtenu par le laminage à froid étant de 70 à 90 % ;

h) recuit de recristallisation du produit plat en acier laminé à froid à une température de recuit de 650 à 900 °C, le recuit étant éventuellement effectué sous une atmosphère de recuit de décarburation ;

i) dressage par laminage éventuel du produit plat en acier laminé à froid à un degré de dressage de 0,3 à 2,0 % ;

dans lequel la température d'étirage de brame Bzt, le temps de séjour total GLZ de la brame dans le four de recuit entre son insertion et son retrait, la réduction d'épaisseur lors de la dernière passe de laminage à chaud $\Delta dF$ et la température d'enroulement HT remplissent la condition suivante :

$$-0{,}529653 * Q + 0{,}944372 * HT\_t + 0{,}711559 * \Delta dF\_t < -0{,}1889459$$

| avec | Q = | $((Bzt/GLZ) - 5{,}55281\ °C/min)/(1{,}777359\ °C/min)$ |
|---|---|---|
| | Bzt : | température d'étirage de brame en °C |
| | GLZ : | temps de séjour total en min |
| | HT_t = | $(HT - 728{,}13030\ °C)/42{,}300114\ °C$ |
| | HT : | température d'enroulement en °C |
| | $\Delta dF\_t =$ | $(\Delta dF - 12{,}43384\ \%)/2{,}306328\ \%$ |
| | $\Delta dF :$ | réduction d'épaisseur lors de la dernière passe de laminage à chaud en %. |

**2.** Procédé selon la revendication 1, **caractérisé en ce que** la température d'étirage de brame Bzt est inférieure à 1 250 °C.

**3.** Procédé selon l'une des revendications précédentes, **caractérisé en ce que** le recuit de recristallisation est effectué lors d'un passage à une température de recuit de 650 à 870 °C à une vitesse de passage de 70 à 180 m/min et à un point de rosée de l'atmosphère de recuit de +15 °C à -50 °C.

4. Procédé selon l'une des revendications précédentes, **caractérisé en ce que** le degré de déformation obtenu lors du dressage par laminage est de 0,5 à 2 %.

5. Procédé selon l'une des revendications précédentes, **caractérisé en ce que** le produit plat en acier est recouvert d'un revêtement anti-corrosion.

6. Procédé selon la revendication 5, **caractérisé en ce que** le revêtement est un revêtement à base de Zn.

7. Produit plat en acier laminé à froid fabriqué à partir d'un acier et composé de, en % en poids,

| | |
|---|---|
| C : | 0,0003 à 0,050 % |
| Si : | 0,0001 à 0,20 % |
| Mn: | 0,01 à 1,5 % |
| P : | 0,001 à 0,10 % |
| S : | 0,0005 à 0,030 % |
| Al : | 0,001 à 0,12 % |
| N : | 0,0001 à 0,01 % |

et éventuellement respectivement d'un ou de plusieurs éléments du groupe constitué par « Ti, Nb, B, Cu, Cr, Ni, Mo, Sn » tant que

| | |
|---|---|
| Ti: | 0,0001 à 0,15 % |
| Nb: | 0,0001 à 0,05 % |
| B : | ≤ 0,005 % |
| Cu: | ≤ 0,15 % |
| Cr: | ≤ 0,15% |
| Ni: | ≤ 0,15 % |
| Mo: | ≤ 0,10 % |
| Sn: | ≤ 0,05 % |

d'un reste Fe et d'impuretés inévitables,
et
qui présente, sur au moins l'une de ses surfaces, une faible ondulation lors d'une déformation biaxiale de cinq pour cent, laquelle ondulation se **caractérise par** une valeur Wsa(1-5) inférieure à 0,35 $\mu$m, le produit plat en acier présentant une anisotropie planaire $\Delta$r de -0,5 à +0,5 et, dans une zone qui s'étend de la surface concernée du produit plat en acier respectif jusqu'à une profondeur inférieure à 200 $\mu$m, une nanodureté H supérieure à 0,1 GPa et inférieure à 3,0 GPa, dans lequel

- la valeur Wsa(1-5) selon la fiche d'essai acier-fer SEP 1941, 1ère édition, mai 2012, dans une mesure dans le sens du laminage,
- l'anisotropie plane $\Delta$r selon la norme DIN EN ISO 6892-1:2009 et
- la nanodureté H selon la norme DIN EN ISO 14577-1/-2/-4 sont déterminées.

8. Produit plat en acier selon la revendication 7, **caractérisé en ce que** la valeur Wsa(1-5) déterminée après la déformation biaxiale de cinq pour cent sur son au moins une surface n'est pas supérieure de plus de 0,05 $\mu$m à la valeur Wsa(1-5) de la surface concernée avant la déformation.

9. Produit plat en acier selon la revendication 7 ou 8, **caractérisé en ce que** la taille moyenne des précipitations dans la bande froide, déterminée selon la norme DIN EN IS 12047, est de 60 à 150 nm.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016055227 A1
- EP 2700731 A1
- DE 19622164 C1

**In der Beschreibung aufgeführte Nicht-Patentliteratur**

- **WASSERMANN, G ; H.-J. BUNGE.** Mathematische Methoden der Texturanalyse. Akademie-Verlag, 1969, 330
- **H.-J. BUNGE.** Mathematische Methoden der Texturanalyse. Akademie-Verlag, 1969
- **H.-J. BUNGE.** Texture Analysis in Material Science. Butterworth, 1983